(19) Europäisches Patentamt / European Patent Office / Office européen des brevets

(11) **EP 4 142 390 A1**

(12) **EUROPEAN PATENT APPLICATION**
published in accordance with Art. 153(4) EPC

(43) Date of publication:
**01.03.2023 Bulletin 2023/09**

(21) Application number: **21791901.8**

(22) Date of filing: **14.04.2021**

(51) International Patent Classification (IPC):
**H04W 72/04** *(2009.01)* **H04W 72/10** *(2009.01)*

(52) Cooperative Patent Classification (CPC):
**H04W 72/04; H04W 72/56**

(86) International application number:
**PCT/CN2021/087247**

(87) International publication number:
**WO 2021/213229 (28.10.2021 Gazette 2021/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.04.2020 CN 202010323799**

(71) Applicant: **Beijing Unisoc Communications Technology Co., Ltd**
**Beijing 100083 (CN)**

(72) Inventor: **ZHOU, Huan**
**Beijing 100083 (CN)**

(74) Representative: **Mewburn Ellis LLP**
**Aurora Building**
**Counterslip**
**Bristol BS1 6BX (GB)**

(54) **CHANNEL RESOURCE TRANSMISSION METHOD AND DEVICE**

(57) A method for channel resource transmission and devices are provided. The method includes: determining a first information-amount of first uplink control information (UCI) and a second information-amount of second UCI, the first UCI is carried on a first physical uplink control channel (PUCCH), and the second UCI is carried on a second PUCCH, a time-domain resource for the first PUCCH overlaps with a time-domain resource for the second PUCCH; determining according to the first information-amount and the second information-amount whether the first UCI and the second UCI are to be carried on the first PUCCH; and transmitting the first PUCCH to an access-network device when the first UCI and the second UCI are determined to be carried on the first PUCCH, where the first PUCCH carries the first UCI and the second UCI. By implementing the disclosure, it is possible to improve throughput and performance of a communication system.

TERMINAL DEVICE — ACCESS-NETWORK DEVICE

S201, DETERMINE FIRST INFORMATION-AMOUNT OF FIRST UCI AND SECOND INFORMATION-AMOUNT OF SECOND UCI

S201, DETERMINE FIRST INFORMATION-AMOUNT OF FIRST UCI AND SECOND INFORMATION-AMOUNT OF SECOND UCI

S202, DETERMINE, ACCORDING TO FIRST INFORMATION-AMOUNT AND SECOND INFORMATION-AMOUNT, WHETHER FIRST UCI AND SECOND UCI ARE TO BE CARRIED ON FIRST PUCCH

S202, DETERMINE, ACCORDING TO FIRST INFORMATION-AMOUNT AND SECOND INFORMATION-AMOUNT, WHETHER FIRST UCI AND SECOND UCI ARE TO BE CARRIED ON FIRST PUCCH

S203, TRANSMIT FIRST PUCCH, WHERE FIRST PUCCH CARRIES FIRST UCI AND SECOND UCI

FIG. 2

**Description**

TECHNICAL FIELD

This disclosure relates to the field of communication technology, and particularly to a method for channel resource transmission and devices.

BACKGROUND

5th-generation (5G) new radio (NR) is a global 5G standard for a new air-interface design based on orthogonal frequency division multiplexing (OFDM) technology, and is also the basis for a next-generation cellular mobile communication technology. 5G technology has low latency and high reliability. However, when services of a terminal device have high priority or low priority, if a time-domain resource for data or control information of a low-priority service overlaps with a time-domain resource for data or control information of a high-priority service, the data or control information of the low-priority service is likely to be discarded, which will result in reduced throughput and performance of a communication system.

SUMMARY

The disclosure provides a method for channel resource transmission and devices, which can improve throughput and performance of a communication system.

In a first aspect, a method for channel resource transmission is provided in the disclosure. The method includes the following. A terminal device determines a first information-amount of first uplink control information (UCI) and a second information-amount of second UCI. The first UCI is carried on a first physical uplink control channel (PUCCH), and the second UCI is carried on a second PUCCH. A time-domain resource for the first PUCCH overlaps with a time-domain resource for the second PUCCH, and the first UCI has a higher priority than the second UCI. The terminal device determines, according to the first information-amount and the second information-amount, whether the first UCI and the second UCI are to be carried on the first PUCCH. The terminal device transmits the first PUCCH to an access-network device if the terminal device determines that the first UCI and the second UCI are to be carried on the first PUCCH, where the first PUCCH carries the first UCI and the second UCI.

In a second aspect, a method for channel resource transmission is provided in the disclosure. The method includes the following. An access-network device determines a first information-amount of first UCI and a second information-amount of second UCI. The first UCI is carried on a first PUCCH, and the second UCI is carried on a second PUCCH. A time-domain resource for the first PUCCH overlaps with a time-domain resource for the second PUCCH, and the first UCI has a higher priority than the second UCI. The access-network device determines, according to the first information-amount and the second information-amount, whether the first PUCCH carries the first UCI and the second UCI. The access-network device receives the first PUCCH transmitted by a terminal device, if the access-network device determines that the first PUCCH carries the first UCI and the second UCI, where the first PUCCH carries the first UCI and the second UCI.

In a third aspect, a method for channel resource transmission is provided in the disclosure. The method includes the following. A terminal device determines the number of resource elements (RE) required for first UCI and the number of REs for second UCI. The first UCI is carried on a first PUSCH, and the second UCI is carried on a second PUCCH. A time-domain resource for the first PUSCH overlaps with a time-domain resource for the second PUCCH, and the first UCI has a higher priority than the second UCI. The terminal device determines mapping information according to the numbers of REs required, where the mapping information includes a mapping between the first UCI, the second UCI, and REs for a target physical uplink channel, and the target physical uplink channel is the first PUSCH or the second PUCCH. The terminal device transmits the target physical uplink channel carrying the first UCI and the second UCI to an access-network device according to the mapping information.

In a fourth aspect, a method for channel resource transmission is provided in the disclosure. The method includes the following. An access-network device determines the number of REs for first UCI and the number of REs for second UCI. The first UCI is carried on a first PUSCH, and the second UCI is carried on a second PUCCH. A time-domain resource for the first PUSCH overlaps with a time-domain resource for the second PUCCH, and the first UCI has a higher priority than the second UCI. The access-network device determines mapping information according to the numbers of REs required, where the mapping information includes a mapping between the first UCI, the second UCI, and REs for a target physical uplink channel, and the target physical uplink channel is the first PUSCH or the second PUCCH. The access-network device receives, according to the mapping information, the target physical uplink channel carrying the first UCI and the second UCI that is transmitted by a terminal device.

In a fifth aspect, an apparatus for channel resource transmission is provided in the disclosure. The apparatus includes a processing unit and a communicating unit. The processing unit is configured to determine a first information-amount of first UCI and a second information-amount of second UCI. The first UCI is carried on a first PUCCH, the second UCI is carried on a second PUCCH. A time-domain resource for the first PUCCH overlaps with a time-domain resource for the second PUCCH, and the first UCI has a higher priority than the second UCI. The processing unit is configured to determine, according to the first information-amount and the second information-amount, whether the first UCI and the second UCI are to be carried on the first PUCCH. The communicating unit is configured to transmit the first PUCCH to an access-network device if the first UCI and the second UCI are determined to be carried on the first PUCCH, where the first PUCCH carries the first UCI and the second UCI.

In a sixth aspect, an apparatus for channel resource transmission is provided in the disclosure. The apparatus includes a processing unit and a communicating unit. The processing unit is configured to determine a first information-amount of first UCI and a second information-amount of second UCI. The first UCI is carried on a first PUCCH, and the second UCI is carried on a second PUCCH. A time-domain resource for the first PUCCH overlaps with a time-domain resource for the second PUCCH, and the first UCI has a higher priority than the second UCI. The processing unit is configured to determine, according to the first information-amount and the second information-amount, whether the first PUCCH carries the first UCI and the second UCI. The communicating unit is configured to receive the first PUCCH transmitted by a terminal device, if the first PUCCH is determined to be carrying the first UCI and the second UCI, where the first PUCCH carries the first UCI and the second UCI.

In a seventh aspect, an apparatus for channel resource transmission is provided in the disclosure. The apparatus includes a processing unit and a communicating unit. The processing unit is configured to determine the number of REs for first UCI and the number of REs for second UCI. The first UCI is carried on a first PUSCH, and the second UCI is carried on a second PUCCH. A time-domain resource for the first PUSCH overlaps with a time-domain resource for the second PUCCH, and the first UCI has a higher priority than the second UCI. The processing unit is configured to determine mapping information according to the numbers of REs required, where the mapping information includes a mapping between the first UCI, the second UCI, and REs for a target physical uplink channel, and the target physical uplink channel is the first PUSCH or the second PUCCH. The communicating unit is configured to transmit the target physical uplink channel carrying the first UCI and the second UCI to an access-network device according to the mapping information.

In an eighth aspect, an apparatus for channel resource transmission is provided in the disclosure. The apparatus includes a processing unit and a communicating unit. The processing unit is configured to determine the number of REs for first UCI and the number of REs for second UCI. The first UCI is carried on a first PUSCH, and the second UCI is carried on a second PUCCH. A time-domain resource for the first PUSCH overlaps with a time-domain resource for the second PUCCH, and the first UCI has a higher priority than the second UCI. The processing unit is configured to determine mapping information according to the numbers of REs required, where the mapping information includes a mapping between the first UCI, the second UCI, and REs for a target physical uplink channel, and the target physical uplink channel is the first PUSCH or the second PUCCH. The communicating unit is configured to receive, according to the mapping information, the target physical uplink channel carrying the first UCI and the second UCI that is transmitted by a terminal device.

In a ninth aspect, a terminal device is provided in the disclosure. The access-network device includes a memory and a processor coupled with the memory. The memory is configured to store computer-readable instructions. The processor is configured to execute the computer-readable instructions to cause the terminal device to perform the methods described in the first aspect and in the third aspect.

In a tenth aspect, an access-network device is provided in the disclosure. The access-network device includes a memory and a processor coupled with the memory. The memory is configured to store computer-readable instructions. The processor is configured to execute the computer-readable instructions to cause the access-network device to perform the methods described in the second aspect and in the fourth aspect.

In an eleventh aspect, a computer-readable storage medium is provided in the disclosure. The computer-readable storage medium is configured to store one or more instructions. The one or more instructions can be loaded by a processor to perform the methods described in the first aspect and in the third aspect.

In a twelfth aspect, a computer-readable storage medium is provided in the disclosure. The computer-readable storage medium is configured to store one or more instructions. The one or more instructions can be loaded by a processor to perform the methods described in the second aspect and in the fourth aspect.

In the disclosure, if the time-domain resource for the first PUCCH carrying the first UCI overlaps with the time-domain resource for the second PUCCH carrying the second UCI, the terminal device firstly determines information amounts of the first UCI and the second UCI, and then according to whether the information amounts exceed a channel capacity of the first PUCCH, the terminal devices determines whether the first UCI and the second UCI are to be carried on the first PUCCH. If the information amounts of the first UCI and the second UCI do not exceed the channel capacity of the first PUCCH, the first control information and the second control information can be multiplexed, thereby avoiding discarding of the second control information. Therefore, by implementing the disclosure, it is possible to improve throughput and performance of a communication system.

BRIEF DESCRIPTION OF THE DRAWINGS

In order to describe technical solutions of implementations of the disclosure more clearly, the following will give a brief introduction to the accompanying drawings used for describing implementations. Apparently, the accompanying drawings described below are some implementations of the disclosure. Based on these drawings, those of ordinary skill in the art can also obtain other drawings without creative effort.

FIG. 1 is a schematic architectural diagram of a communication system provided in implementations of the disclosure.
FIG. 2 is a schematic flowchart of a method for channel resource transmission provided in implementations of the disclosure.
FIG. 3 is a schematic diagram illustrating resource mapping provided in implementations of the disclosure.
FIG. 4 is a schematic diagram illustrating resource mapping provided in implementations of the disclosure.
FIG. 5 is a schematic diagram illustrating resource mapping provided in implementations of the disclosure.
FIG. 6 is a schematic flowchart of a method for channel resource transmission provided in implementations of the disclosure.
FIG. 7 is a schematic diagram illustrating resource mapping provided in implementations of the disclosure.
FIG. 8 is a schematic diagram illustrating resource mapping provided in implementations of the disclosure.
FIG. 9 is a schematic structural diagram of an apparatus for channel resource transmission provided in implementations of the disclosure.
FIG. 10 is a schematic structural diagram of an apparatus for channel resource transmission provided in implementations of the disclosure.
FIG. 11 is a schematic structural diagram of a terminal device provided in implementations of the disclosure.
FIG. 12 is a schematic structural diagram of an access device provided in implementations of the disclosure.

DETAILED DESCRIPTION

Technical solutions of implementations of the disclosure will be described clearly and completely below with reference to the accompanying drawings of the implementations of the disclosure. Apparently, implementations described herein are merely some implementations, rather than all implementations, of the disclosure. Based on the implementations of the disclosure, all other implementations obtained by those of ordinary skill in the art without creative effort shall fall within the protection scope of the disclosure. In addition, the following implementations and features in the implementations may be combined with each other without conflict.

The terms used in the disclosure are merely intended for describing particular implementations, rather than limiting the disclosure. The singular forms "a/an" and "the" used in the disclosure and the claims are also intended to include the plural forms, unless stated otherwise in the context. It should be understood that, the term "and/or" used herein is meant to include any or all possible combinations of one or more listed items associated.

In order for better understanding of implementations of the disclosure, the following will firstly describe a system architecture of implementations of the disclosure.

A method provided in implementations of the disclosure can be applied to various communication systems, which may be, for example, a 5th-generation (5G) communication system, a mixed architecture of long-term evolution (LTE) and 5G, or a 5G new radio (NR) system, or new communication systems that will emerge in future development of communication, etc.

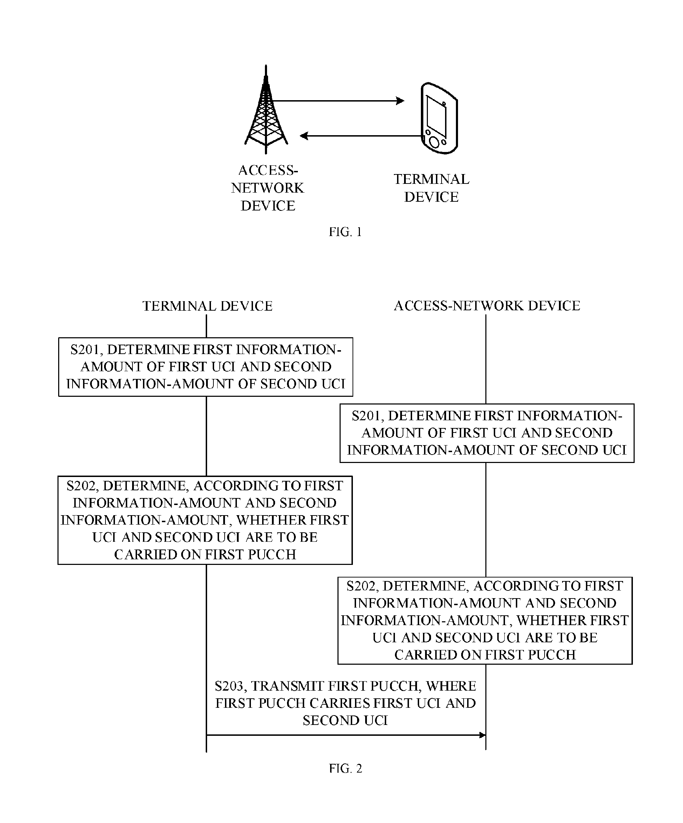

FIG. 1 is a schematic architectural diagram of a communication system provided in implementations of the disclosure. The schemes of the disclosure can be applied to the communication system. The communication system may include at least one access-network device and at least one terminal device. In FIG. 1, the communication system including one access-network device and one terminal device is taken as an example.

In the disclosure, the terminal device is an entity at a user side for receiving or transmitting signals. The terminal device may be a device that provides voice and/or data connectivity to a user. The terminal device may refer to various forms of user equipments (UE), access terminals, subscriber units, subscriber stations, mobile stations (MS), remote stations, remote terminals, mobile devices, user terminals, wireless communication devices, user agents, or user device, etc. The terminal device may also be a cellular phone, a cordless phone, a session initiation protocol (SIP) phone, a wireless local loop (WLL) station, a personal digital assistant (PDA), a handheld device with wireless communication functions, a computing device, or other processing devices connected to a wireless modem, an in-vehicle device, a wearable device, a terminal device in a 5G network, or a terminal device in a future evolved public land mobile network (PLMN), etc. Implementations of the disclosure are not limited in this regard.

The access-network device is a device that provides functions of a base station in 5G NR, which includes gNB.

Implementations of the disclosure are not limited in this regard.

Once a connection between the terminal device and the access-network device is established successfully, if there is a high-priority service, the terminal device can transmit first control information on a first physical uplink control channel (PUCCH). If there is a low-priority service, the terminal device can transmit second control information on a second PUCCH. If there are both the high-priority service and the low-priority service, a time-domain resource for the first PUCCH will overlap with a time-domain resource for the second PUCCH. To this end, implementations of the disclosure provide a scheme for channel resource transmission, which is possible to realize multiplexing of first uplink control information (UCI) and second UCI, thereby improving throughput and performance of a communication system. Refer to FIG. 2, which is a schematic flowchart of a method for channel resource transmission provided in implementations of the disclosure. As illustrated in FIG. 2, the method can include but is not limited to the following operations.

S201, a terminal device determines a first information-amount of first UCI and a second information-amount of second UCI. Accordingly, an access-network device can also determine the first information-amount of the first UCI and the second information-amount of the second UCI. The first UCI is carried on a first PUCCH, and the second UCI is carried on a second PUCCH. A time-domain resource for the first PUCCH overlaps with a time-domain resource for the second PUCCH, and the first UCI has a higher priority than the second UCI.

S202, the terminal device determines, according to the first information-amount and the second information-amount, whether the first UCI and the second UCI are to be carried on the first PUCCH. Accordingly, the access-network device determines, according to the first information-amount and the second information-amount, whether the first PUCCH carries the first UCI and the second UCI.

The first UCI includes, but is not limited to, a first hybrid automatic repeat request (HARQ)-acknowledgement (ACK), first channel state information (CSI), and a first scheduling request (SR). The second UCI includes, but is not limited to, a second HARQ-ACK, second CSI, and a second SR.

Optionally, in implementations of the disclosure, when a connection between the terminal device and the access-network device is established successfully, the access-network device can transmit first configuration information to the terminal device via higher-layer signaling. The first configuration information indicates that the terminal device determines, according to the first information-amount and the second information-amount, whether the first UCI and the second UCI are to be carried on the first PUCCH. Therefore, if the terminal device has detected that the time-domain resource for the first PUCCH overlaps with the time-domain resource for the second PUCCH, the terminal device can determine, according to the first information-amount of the first UCI and the second information-amount of the second UCI, whether the first UCI and the second UCI are to be carried on the first PUCCH.

Since the first PUCCH has different formats, the manner in which the terminal device determines whether the first UCI and the second UCI are to be carried on the first PUCCH differs accordingly, which may include but is not limited to the following manners.

In a possible implementation, if the first PUCCH is of format 0 (PUCCH format 0) or format 1 (PUCCH format 1), and a sum of the first information-amount and the second information-amount is less than or equal to a first channel-capacity threshold corresponding to the first PUCCH, the terminal device determines that the first UCI and the second UCI are to be carried on the first PUCCH. Accordingly, the access-network device determines that the first PUCCH carries the first UCI and the second UCI. The first information-amount is the number of bits in a HARQ-ACK in the first control information, and the second information-amount is the number of bit in a HARQ-ACK in the second control information. The first channel-capacity threshold may be 2 bits.

For example, if the first control information includes 1-bit HARQ-ACK and the second control information includes 1-bit HARQ-ACK, the first information-amount is 1 bit and the second information-amount is 1 bit, and the sum of the first information-amount and the second information-amount is 2 bits, which is equal to the first channel-capacity threshold. The terminal device determines that the first UCI and the second UCI can be carried on the first PUCCH. Accordingly, the access-network device determines that the first PUCCH carries the first UCI and the second UCI. For another example, if the first control information includes 2-bit HARQ-ACK and the second control information includes 1-bit HARQ-ACK, the first information-amount is 2 bits and the second information-amount is 1 bit, and the sum of the first information-amount and the second information-amount is 3 bits, which is greater than the first channel-capacity threshold. In this case, the terminal device determines that the first control information and the second control information cannot be carried on the first PUCCH. The terminal device may firstly transmit the first control information on the first physical control channel and discard the second control information temporarily, and can transmit the second control information when initiating a request for low-priority service next time.

In a possible implementation, if the first PUCCH is of format 2 (PUCCH format 2), format 3 (PUCCH format 3), or format 4 (PUCCH format 4), and a third information-amount is less than or equal to a second channel-capacity threshold corresponding to the first PUCCH, the terminal device determines that the first UCI and the second UCI are to be carried on the first PUCCH. Accordingly, the access-network device determines that the first PUCCH carries the first UCI and the second UCI.

The third information-amount is determined according to the first information-amount, the second information-amount, a first code rate (maxCodeRate1) of the first UCI, and a second code rate (maxCodeRate2) of the second UCI. The first information-amount includes information amounts of the first HARQ-ACK, the first CSI, the first SR, and a first cyclic redundancy check (CRC) in the first control information. The second information-amount includes information amounts of the second HARQ-ACK, the second CSI, the second SR, and a second CRC in the second control information. The third information-amount is a sum obtained by adding the first information-amount and the second information-amount in proportion, where the proportion is a ratio of the first code rate of the first UCI to the second code rate of the second UCI. The first code rate and the second code rate are pre-configured for the first physical control channel via higher-layer signaling by the access-network device when a connection is established between the access-network device and the terminal device. The first UCI is transmitted on the first PUCCH with the first code rate, and the second UCI is transmitted on the first PUCCH with the second code rate.

Exemplarily, the first information-amount can be calculated according to formula (1) below:

$$O_{highpriority} = O_{HPACK} + O_{HPSR} + O_{HPCSI} + O_{HPCRC} \tag{1}$$

$O_{HPACK}$ represents the number of bits in the first HARQ-ACK. If the first control information does not include HARQ-ACK, $O_{HPACK} = 0$. $O_{HPSR}$ represents the number of bits in the first SR. If the first control information does not include SR, $O_{HPSR} = 0$. If the first PUCCH is of format 2, $O_{HPCSI}$ represents a reported number of bits in the first CSI; if the first PUCCH is of format 3 or format 4, $O_{HPCSI}$ represents a reported number of bits in high-priority (HP) CSI-1 of the first CSI. $O_{HPCRC}$ represents the number of bits in the first CRC.

The second information-amount can be calculated according to formula (2) below:

$$O_{lowpriority} = O_{LPACK} + O_{LPSR} + O_{LPCSI} + O_{LPCRC} \tag{2}$$

$O_{LPACK}$ represents the number of bits in the second HARQ-ACK. If the second control information does not include HARQ-ACK, $O_{LPACK} = 0$. $O_{LPSR}$ represents the number of bits in the second SR. If the second control information does not include SR, $O_{LPSR} = 0$. If first PUCCH is of format 2, $O_{LPCSI}$ represents a reported number of bits in the second CSI; if the first PUCCH is of format 3 or format 4, $O_{LPCSI}$ represents a reported number of bits in low-priority (LP) CSI-1 of the second CSI. $O_{LPCRC}$ represents the number of bits in the second CRC.

Whether the first UCI and the second UCI are to be carried on the first PUCCH can be determined according to formula (3) below.

$$O_{highpriority} + \beta O_{lowpriority} \leq M_{RB}^{PUCCH} \cdot N_{sc,ctrl}^{RB} \cdot N_{symb}^{PUCCH} \cdot Q_m \cdot r \tag{3}$$

$M_{RB}^{PUCCH}$ represents the number of resource blocks (RB) contained in the first PUCCH. $N_{sc,ctrl}^{RB}$ represents the number of subcarriers contained in RBs of the first PUCCH. $N_{symb}^{PUCCH}$ represents the number of valid symbols in the first PUCCH when the first PUCCH is of format 2, format 3, or format 4. $Q_m$ represents a modulation divisor. $r$ represents the first code rate configured for the first physical control channel by the access-network device via higher-layer signaling. $\beta$ represents a ratio of the first code rate of the first UCI to the second code rate of the second UCI.

S203, the terminal device transmits the first PUCCH to the access-network device. Accordingly, the access-network device receives the first PUCCH transmitted by the terminal device. The first PUCCH carries the first UCI and the second UCI.

After determining that the first UCI and the second UCI are to be carried on the first PUCCH, the terminal device transmits the first control information and the second control information on the first PUCCH, thereby realizing multiplexing of the first control information and the second control information. The manner of multiplexing includes but is not limited to the following.

In a possible implementation, the first PUCCH is of format 0. For example, the first control information includes 1-bit HARQ-ACK, the second control information includes 1-bit HARQ-ACK, and the terminal device transmits the 2 bits of HARQ-ACK on the first PUCCH by using four sequences $r_{u,v}^{(\alpha_{\tilde{p}})}(n)$ each having a length of 12. The four sequences may be represented by $\{x_0(n)\ x_1(n)\ x_2(n)\ x_3(n)\}$, and the four sequences use the same sequence index and differ by 3 in cyclic shift. $r_{u,v}^{(\alpha_{\tilde{p}})}(n)$ is a cyclic shift on a base sequence. The base sequence is configured via a cell-level radio resource control (RRC) parameter, remaining minimum system information (RMSI), and different base sequences can be used in different slots based on configured identities (ID).

In a possible implementation, the first PUCCH is of format 1. For example, the first control information includes 1-bit HARQ-ACK, the second control information includes 1-bit HARQ-ACK, and the 2 bits of HARQ-ACK are transmitted on the first PUCCH. The terminal device firstly generates a symbol by modulating the HARQ-ACK through binary phase shift keying (BPSK) or quadrature phase shift keying (QPSK). The symbol is multiplied by a base sequence with a length of 12 and then multiplied by a time-domain orthogonal cover code (OCC), and finally mapped onto twelve subcarriers of a corresponding time-domain symbol for transmission.

In a possible implementation, the first PUCCH is of format 2, and target resource elements (RE) for the first PUCCH are used for demodulation reference signal (DMRS) transmission. Before the terminal device transmits the first PUCCH to the access-network device, the terminal device obtains first jointly-encoded information by performing joint encoding on the first UCI, and obtains second jointly-encoded information by performing joint encoding on the second UCI. The terminal device maps the first jointly-encoded information, starting from a first non-target RE in an order of firstly frequency domain and then time domain. The terminal device maps the second jointly-encoded information, starting from a first non-target RE in a remaining resource for the first physical control channel in the order of firstly frequency domain and then time domain. After the first control information and the second control information are mapped onto a resource for the first PUCCH by the terminal device, the terminal device transmits the first PUCCH to the access-network device. The first jointly-encoded information is obtained by performing joint encoding on the first control information in an order of HP HARQ-ACK, HP SR, and HP CSI. The second jointly-encoded information is obtained by performing joint encoding on the second control information in an order of LP HARQ-ACK, LP SR, and LP CSI.

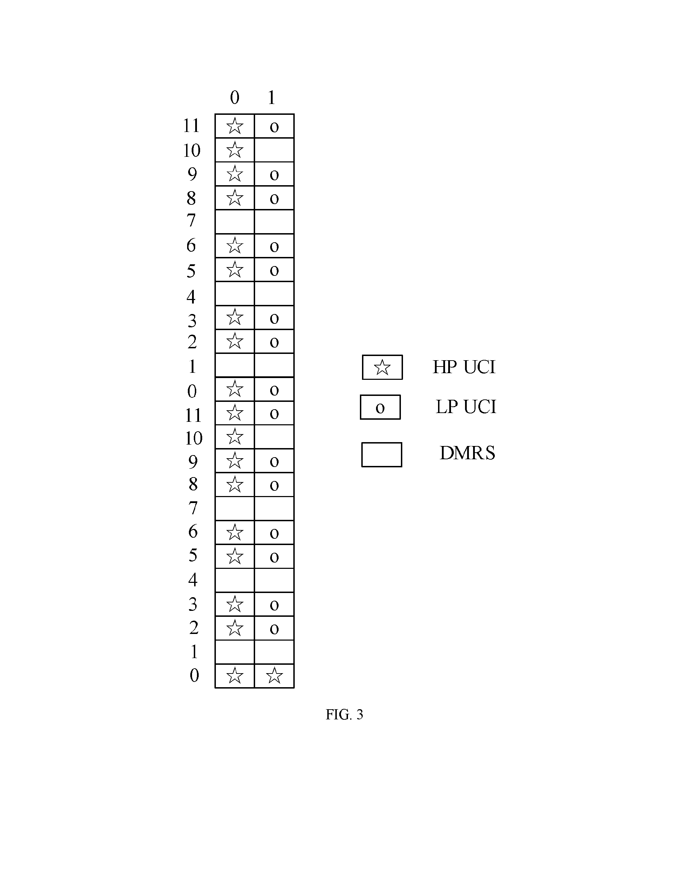

For example, refer to FIG. 3, which is a schematic diagram illustrating resource mapping provided in implementations of the disclosure. FIG. 3 illustrates a resource for the first PUCCH which includes two OFDM symbols in time domain and two physical resource blocks (PRB) in frequency domain. REs with indexes 1, 4, and 7 in frequency domain are target REs used for DMRS transmission. The first non-target RE is an RE with index 0 in a first OFDM symbol from the left. The terminal device maps the first jointly-encoded information, starting from the first non-target RE in the order of firstly frequency domain and then time domain. Mapping of the first control information is completed when the first control information is mapped onto an RE corresponding to index 0 in a second OFDM symbol. Then the terminal device maps the second jointly-encoded information, starting from an RE corresponding to index 2 in the second OFDM symbol in the order of firstly frequency domain and then time domain. Then the terminal device transmits the first PUCCH to the access-network device.

In a possible implementation, the first PUCCH is of format 3 or format 4, and target REs for the first PUCCH are used for DMRS transmission. Before the terminal device transmits the first PUCCH to the access-network device, the terminal device obtains first jointly-encoded information and first separately-encoded information by encoding the first UCI, and obtains second jointly-encoded information and second separately-encoded information by encoding the second UCI. The terminal device maps the first jointly-encoded information evenly onto REs which are at both sides of the target REs in an order of firstly frequency domain and then time domain. The terminal device maps the second jointly-encoded information evenly onto REs which are at both sides of the target REs, other than REs corresponding to the first jointly-encoded information, in the order of firstly frequency domain and then time domain. The terminal device maps the first separately-encoded information onto a first remaining resource in the order of firstly frequency domain and then time domain, where the first remaining resource is REs in a resource for the first PUCCH other than the REs corresponding to the first jointly-encoded information and REs corresponding to the second jointly-encoded information. The terminal device maps the second separately-encoded information onto a second remaining resource in the order of firstly frequency domain and then time domain, where the second remaining resource is REs in the resource for the first PUCCH other than the REs corresponding to the first jointly-encoded information, the REs corresponding to the second jointly-encoded information, and REs corresponding to the first separately-encoded information. After the first control information and the second control information are mapped onto the resource for the first PUCCH by the terminal device, the terminal device transmits the first PUCCH to the access-network device.

The first jointly-encoded information is obtained by performing joint encoding on the first control information in an order of HP HARQ-ACK, HP SR, and HP CSI-1. The second jointly-encoded information is obtained by performing joint encoding on the second control information in an order of LP HARQ-ACK, LP SR, and LP CSI-1. The first separately-encoded information is obtained by performing separate channel encoding on HP CSI-2 of the first CSI. The first separately-encoded information is obtained by performing separate channel encoding on LP CSI-2 of the second CSI.

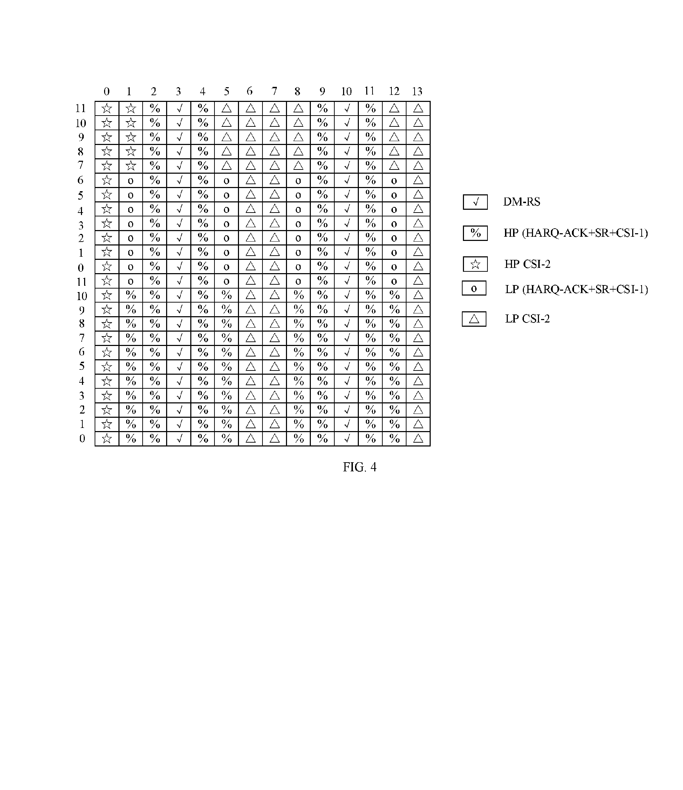

For example, refer to FIG. 4, which is a schematic diagram illustrating resource mapping provided in implementations of the disclosure. FIG. 4 illustrates a resource for the first PUCCH which includes fourteen OFDM symbols in time domain and two PRBs in frequency domain. REs corresponding to OFDM symbols with indexes 3 and 10 are target REs used for DMRS transmission. The terminal device maps the first jointly-encoded information evenly onto both sides of the target REs in the order of firstly frequency domain and then time domain, as denoted by square grids with "%" in FIG. 4. Then the terminal device maps the second jointly-encoded information evenly onto both sides of the target REs except the REs corresponding to the first jointly-encoded information, in the order of firstly frequency domain and then time domain, as denoted by square grids with "o" in FIG. 4. Then the terminal device maps the first separately-encoded information onto the first remaining resource in the order of firstly frequency domain and then time domain, as denoted by square grids with "*" in FIG. 4. The terminal device maps the second separately-encoded information onto the second remaining resource in the order of firstly frequency domain and then time domain, as denoted by square grids with "△" in FIG. 4.

In a possible implementation, the first PUCCH is of format 3 or format 4, and target REs for the first PUCCH are used for DMRS transmission. Before the terminal device transmits the first PUCCH to the access-network device, the terminal device obtains first jointly-encoded information and first separately-encoded information by encoding the first UCI, and obtains second jointly-encoded information and second separately-encoded information by encoding the second UCI. The terminal device maps the first jointly-encoded information evenly onto REs which are at both sides of the target REs in an order of firstly frequency domain and then time domain. The terminal device maps the first separately-encoded information onto a first remaining resource in the order of firstly frequency domain and then time domain, where the first remaining resource is REs in a resource for the first PUCCH other than REs corresponding to the first jointly-encoded information. The terminal device maps the second jointly-encoded information onto a second remaining resource in the order of firstly frequency domain and then time domain, where the second remaining resource is REs in the resource for the first PUCCH other than the REs corresponding to the first jointly-encoded information and REs corresponding to the first separately-encoded information. The terminal device maps the second separately-encoded information onto a third remaining resource in the order of firstly frequency domain and then time domain, where the third remaining resource is REs in the resource for the first PUCCH other than the REs corresponding to the first jointly-encoded information, REs corresponding to the second jointly-encoded information, and the REs corresponding to the first separately-encoded information. After the first control information and the second control information are mapped onto the resource for the first PUCCH by the terminal device, the terminal device transmits the first PUCCH to the access-network device.

The first jointly-encoded information is obtained by performing joint encoding on the first control information in an order of HP HARQ-ACK, HP SR, and HP CSI-1. The second jointly-encoded information is obtained by performing joint encoding on the second control information in an order of LP HARQ-ACK, LP SR, and LP CSI-1. The first separately-encoded information is obtained by performing separate channel encoding on HP CSI-2 of the first CSI. The first separately-encoded information is obtained by performing separate channel encoding on LP CSI-2 of the second CSI.

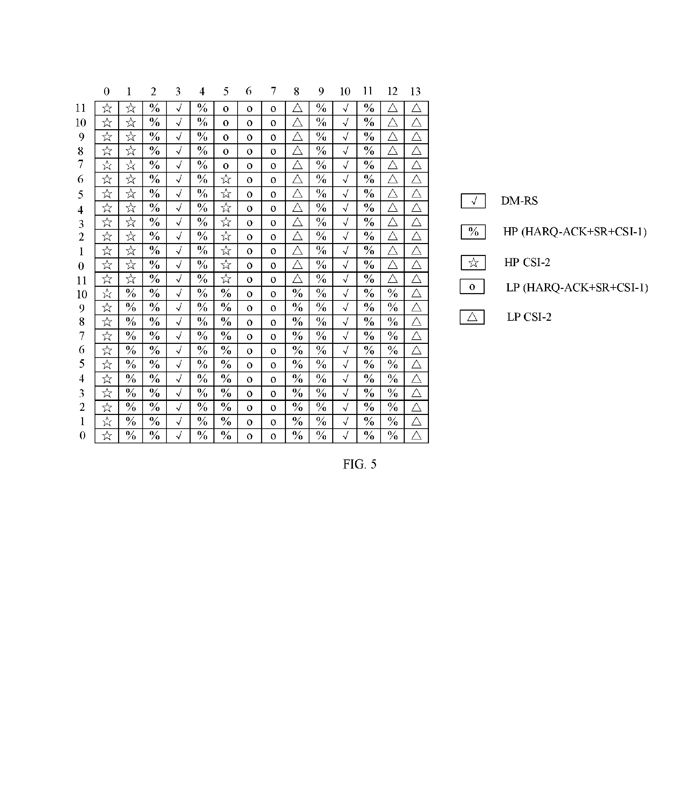

For example, refer to FIG. 5, which is a schematic diagram illustrating resource mapping provided in implementations of the disclosure. FIG. 5 illustrates a resource for the first PUCCH which includes fourteen OFDM symbols in time domain and two PRBs in frequency domain. REs corresponding to OFDM symbols with indexes 3 and 10 are target REs used for DMRS transmission. The terminal device maps the first jointly-encoded information evenly onto both sides of the target REs in the order of firstly frequency domain and then time domain, as denoted by square grids with "%" in FIG. 4. Then the terminal device maps the first separately-encoded information onto the first remaining resource in the order of firstly frequency domain and then time domain, as denoted by square grids with "o" in FIG. 4. Then the terminal device maps the second jointly-encoded information onto the second remaining resource in the order of firstly frequency domain and then time domain, as denoted by square grids with "☆" in FIG. 4. The terminal device maps the second separately-encoded information onto the third remaining resource in the order of firstly frequency domain and then time domain, as denoted by square grids with "△" in FIG. 4.

In implementations of the disclosure, if the time-domain resource for the first PUCCH carrying the first UCI overlaps with the time-domain resource for the second PUCCH carrying the second UCI, the terminal device firstly determines information amounts of the first UCI and the second UCI, and then according to whether the information amounts exceed a channel capacity of the first PUCCH, the terminal devices determines whether the first UCI and the second UCI are to be carried on the first PUCCH. If the information amounts of the first UCI and the second UCI do not exceed the channel capacity of the first PUCCH, the first control information and the second control information can be multiplexed, thereby avoiding discarding of the second control information. Therefore, by implementing the implementations of the disclosure, it is possible to improve throughput and performance of a communication system.

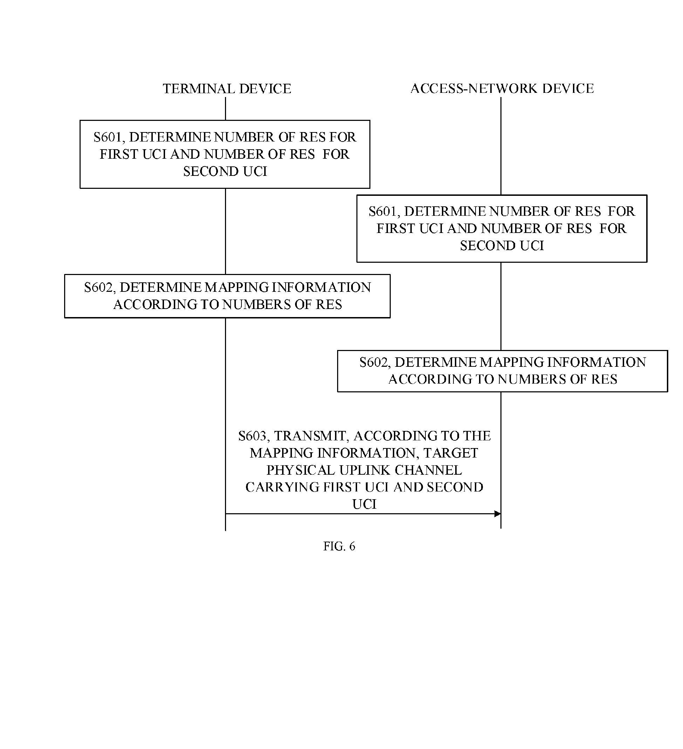

Once a connection between a terminal device and an access-network device is established successfully, if there is a high-priority service, the terminal device can transmit first control information and data on a first physical uplink shared channel (PUSCH). If there is a low-priority service, the terminal device can transmit second control information on a second PUCCH. If there are both the high-priority service and the low-priority service, a time-domain resource for the first PUSCH will overlap with a time-domain resource for the second PUCCH. To this end, the disclosure provides a scheme for channel resource transmission, which is possible to realize multiplexing of first UCI and second UCI, thereby improving throughput and performance of a communication system. Refer to FIG. 6, which is a schematic flowchart of a method for channel resource transmission provided in implementations of the disclosure. As illustrated in FIG. 6, the method can include but is not limited to the following operations.

S601, a terminal device determines the number of REs for first UCI and the number of REs for second UCI.

Accordingly, an access-network device determines the number of REs for the first UCI and the number of REs for the second UCI. The first UCI is carried on a first PUSCH, and the second UCI is carried on a second PUCCH. A time-domain resource for the first PUSCH overlaps with a time-domain resource for the second PUCCH. The first UCI has a higher priority than the second UCI.

The first UCI includes, but is not limited to, a first HARQ-ACK (HP HARQ-ACK), HP CSI-1 and HP CSI-2 of a first CSI, and a first SR (HP SR). The second UCI includes, but is not limited to, a second HARQ-ACK (LP HARQ-ACK), HP CSI-1 and HP CSI-2 of the second CSI, and a second SR (LP SR).

Optionally, when a connection between the terminal device and the access-network device is established successfully, the access-network device can transmit second configuration information to the terminal device via higher-layer signaling. The second configuration information indicates to configure offset-parameter groups for the first control information and the second control information of the terminal device. The offset-parameter group is one group including $\beta_{\text{offset}}^{\text{HARQ-ACK}}$, $\beta_{\text{offset}}^{\text{CSI-1}}$, and $\beta_{\text{offset}}^{\text{CSI-2}}$. $\beta_{\text{offset}}^{\text{HARQ-ACK}}$ is used for calculating the number of REs occupied by a HARQ-ACK in a resource for a physical channel. $\beta_{\text{offset}}^{\text{CSI-1}}$ is used for calculating the number of REs occupied by CSI-1 in a resource for a physical channel. $\beta_{\text{offset}}^{\text{CSI-2}}$ is used for calculating the number of REs occupied by CSI-2 in a resource for a physical channel.

In a possible implementation, the offset-parameter groups configured for the terminal device by the access-network device via higher-layer signaling are static, that is, the first UCI corresponds to one offset-parameter group, and the second UCI corresponds to one offset-parameter group. The terminal device can determine the number of REs for the first UCI directly according to the offset-parameter group for the first UCI; and the terminal device can determine the number of REs for the second UCI according to the offset-parameter group for the second UCI. Accordingly, the access-network device can also determine the number of REs for the first UCI and the number of REs for the second UCI according to the offset-parameter groups configured for the terminal device. The number of REs for the first UCI represents the number of REs for the first HARQ-ACK, the number of REs for CSI-1 of the first CSI, and the number of REs for CSI-2 of the first CSI. The number of REs for the second UCI represents the number of REs for the second HARQ-ACK, the number of REs for CSI-1 of the second CSI, and the number of REs for CSI-2 of the second CSI.

In a possible implementation, the offset-parameter groups configured for the terminal device by the access-network device via higher-layer signaling are dynamic. In this case, when determining the number of REs for the first UCI and the number of REs for second UCI, the terminal device needs to receive indication information transmitted by the access-network device. The indication information indicates a first offset-parameter group for the first UCI and a second offset-parameter group for the second UCI. The first offset-parameter group and the second offset-parameter group are selected from preset offset-parameter groups. The indication information may be carried in downlink control information (DCI) and indicate via a 2-bit field in the DCI.

Manner 1, if the preset offset-parameter groups include a first set of offset-parameter groups and a second set of offset-parameter groups, and each set of offset-parameter groups includes $m$ offset parameter groups, the indication information indicates that the first offset-parameter group is an $i^{\text{th}}$ group among the first set of offset-parameter groups and the second offset-parameter group is an $i^{\text{th}}$ group among the second set of offset-parameter groups.

For example, if $m=4$, offset-parameter groups in the first set of offset-parameter groups may be numbered as 1, 2, 3, and 4 respectively, and offset-parameter groups in the second set of offset-parameter groups may be numbered as 1, 2, 3, and 4 respectively. If the indication information is "2", it indicates that the first offset-parameter group is a 2nd group among the first set of offset-parameter groups, and the second offset-parameter group is a 2nd group among the second set of offset-parameter groups.

Manner 2, if the preset offset-parameter groups include n sets of offset-parameter groups, and each set of offset-parameter groups includes two offset parameter groups, the indication information indicates that the first offset-parameter group is a first group among a $j^{\text{th}}$ set of offset-parameter groups and the second offset-parameter group is a second group among the $j^{\text{th}}$ set of offset-parameter groups, where the $j^{\text{th}}$ set of offset-parameter groups is any one of the n sets of offset-parameter groups.

For example, n=4. If the indication information is "2", it indicates that the first offset-parameter group is a first group in a 2nd set of offset-parameter groups, and the second offset-parameter group is a second group in the 2nd set of offset-parameter groups.

As such, the terminal device can determine the number of REs for the first UCI according to the first offset-parameter group, and determine the number of REs for the second UCI according to the second offset-parameter group. Accordingly, the access-network device can also determine the number of REs for the first UCI and the number of REs for the second UCI according to the offset-parameter groups indicated by the indication information. The number of REs for the first UCI represents the number of REs for the first HARQ-ACK, the number of REs for CSI-1 of the first CSI, and the number of REs for CSI-2 of the first CSI. The number of REs for the second UCI represents the number of REs for the second HARQ-ACK, the number of REs for CSI-1 of the second CSI, and the number of REs for CSI-2 of the second CSI.

S602, the terminal device determines mapping information according to the numbers of REs required, where the mapping information includes a mapping between the first UCI, the second UCI, and REs for a target physical uplink channel, and the target physical uplink channel is the first PUSCH or the second PUCCH. Accordingly, the access-network device can also determine the mapping information according to the numbers of REs required.

S603, the terminal device transmits the target physical uplink channel carrying the first UCI and the second UCI to the access-network device according to the mapping information. Accordingly, the access-network device receives the target physical uplink channel carrying first UCI and the second UCI.

The terminal device transmits the target physical uplink channel carrying the first UCI and the second UCI to the access-network device according to the mapping information. Specifically, target REs for the target physical uplink channel are used for DMRS transmission. The terminal device maps the first UCI, starting from a first non-target RE in a resource for the target physical channel in an order of firstly frequency domain and then time domain. The terminal device maps the second control information, starting from a first non-target RE in a remaining resource for the target physical channel in the order of firstly frequency domain and then time domain. The terminal device transmits the target physical uplink channel carrying the first UCI and the second UCI to the access-network device. The following will elaborate several possible implementations in terms of different target physical uplink channels.

In a possible implementation, the target physical channel is the first PUSCH, that is, the first control information and the second control information are to be carried on the first PUSCH.

In this case, the first PUSCH further carries uplink shared channel (UL-SCH) data. Therefore, the terminal device has to further determine the number of REs that the UL-SCH needs to occupy in the first PUSCH. The terminal device determines the mapping information according to the numbers of REs for the first HARQ-ACK, CSI-1 of the first CSI, and CSI-2 of the first CSI, the numbers of REs for the second HARQ-ACK, CSI-1 of the second CSI, and CSI-2 of the second CSI, and the number of REs for the UL-SCH. The terminal device performs resource mapping on the first control information in an order of firstly the first HARQ-ACK, then CSI-1 of the first CSI, and finally CSI-2 of the first CSI. After mapping of the first control information is completed, the terminal device performs resource mapping on the second control information, without taking into consideration an order among the second HARQ-ACK, CSI-1 of the second CSI, and CSI-2 of the second CSI.

Specifically, the terminal device maps the first HARQ-ACK in the order of firstly frequency domain and then time domain, starting from a first symbol which is after an OFDM symbol corresponding to the target REs.

The terminal device maps CSI-1 of the first CSI, starting from an OFDM symbol corresponding to a first non-target RE in a resource for the first PUSCH. CSI-1 of the first CSI cannot be mapped onto an RE(s) reserved for the first HARQ-ACK, or REs onto which the first HARQ-ACK is mapped. CSI-1 of the first CSI is not frequency-division multiplexed with a coherently demodulated signal.

The terminal device maps CSI-2 of the first CSI, starting from the OFDM symbol corresponding to the first non-target RE in the resource for the first PUSCH. CSI-2 of the first CSI can be mapped onto the RE(s) reserved for the first HARQ-ACK, but cannot be mapped onto the REs onto which the first HARQ-ACK is mapped or REs onto which CSI-1 is mapped. CSI-2 of the first CSI is not frequency-division multiplexed with a coherently demodulated signal.

The terminal device maps the second control information, starting from the OFDM symbol corresponding to the first non-target RE in the resource for the first PUSCH. The second control information can be mapped onto the RE(s) reserved for the first HARQ-ACK, but cannot be mapped onto a resource onto which the first control information is mapped. The second control information is not frequency-division multiplexed with a coherently demodulated signal.

The terminal device maps the UL-SCH, starting from an OFDM symbol corresponding to a first non-target RE in the remaining resource in the first PUSCH.

When mapping the first HARQ-ACK, CSI-1 of the first CSI, and CSI-2 of the first CSI, the terminal device adopts distributed mapping with an interval d. In other words, positions of REs occupied by the first control information in each OFDM symbol are as follows.

If the number of REs for unmapped first control information after scheduling is greater than the number of available REs in an OFDM symbol, $d=1$. That is, if there is still unmapped first control information, the terminal device will continue to map the first control information onto a next OFDM symbol.

If the number of REs for the unmapped first control information after scheduling is less than the number of available REs in an OFDM symbol, $d$ is equal to a ratio of the number of available REs in an OFDM symbol to the number of required REs after scheduling.

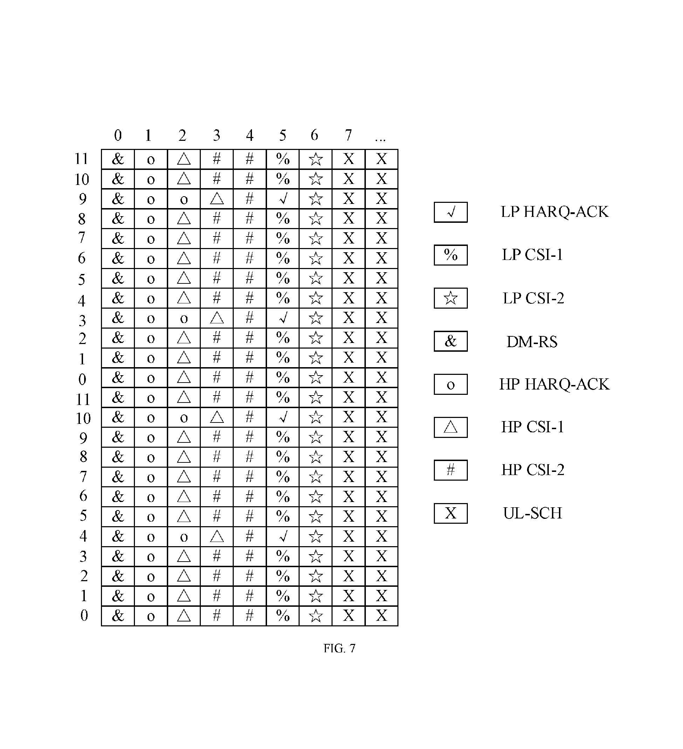

For example, refer to FIG. 7, which is a schematic diagram illustrating resource mapping provided in implementations of the disclosure. As illustrated in FIG. 7, an OFDM symbol with index 0 is used for transmission of a coherently demodulated signal which can also be referred to as a front loaded DMRS, as denoted by square grids with "&" in FIG. 7. The terminal device maps the first HARQ-ACK, starting from an OFDM symbol with index 1. Since the number of resources for the first HARQ-ACK is greater than the number of available REs in the OFDM symbol with index 1, *d=1.* The terminal device maps unmapped first HARQ-ACK onto an OFDM symbol with index 2. The number of resources for the first HARQ-ACK is less than the number of available REs in the OFDM symbol with index 2, and thus the terminal device maps the unmapped first HARQ-ACK onto REs corresponding to indexes 4, 10, 3, and 9 in frequency domain in the OFDM symbol with index 2, as denoted by square grid with "o" in FIG. 7. Then the terminal device maps CSI-1 of the first CSI, starting from an RE with index 0 in frequency domain in the OFDM symbol with index 2, and CSI-1 of the first CSI cannot be mapped onto the REs corresponding to indexes 4, 10, 3, and 9 in frequency domain onto which the first HARQ-ACK is mapped, as denoted by square grids with "△" in FIG. 7. Then the terminal device maps CSI-2 of the first CSI, starting from an RE with index 0 in frequency domain in an OFDM symbol with index 3, and CSI-2 of the first CSI cannot be mapped onto REs with indexes 4, 10, 3, and 9 in frequency domain onto which CSI-2 is mapped, as denoted by square grids with "#" in FIG. 7. Then the terminal device maps the second control information, starting from an RE with index 0 in frequency domain in an OFDM symbol with index 5, as denoted by square grids with "√", "☆", and "%" in FIG. 7. Finally, the terminal device maps the UL-SCH, starting from an RE with index 0 in frequency domain in an OFDM symbol with index 7, as denoted by square grids with "X" in FIG. 7.

In a possible implementation, the target physical channel is the second PUCCH, that is, the first control information and the second control information are to be carried on the second PUCCH. The terminal device determines the mapping information according to the numbers of REs for the first HARQ-ACK, CSI-1 of the first CSI, and CSI-2 of the first CSI, and the numbers of REs for the second HARQ-ACK, CSI-1 of the second CSI, and CSI-2 of the second CSI. The terminal device performs resource mapping on the first control information in an order of firstly the first HARQ-ACK, then CSI-1 of the first CSI, and finally CSI-2 of the first CSI. After mapping of the first control information is completed, the terminal device performs resource mapping on the second control information, without taking into consideration an order among the second HARQ-ACK, CSI-1 of the second CSI, and CSI-2 of the second CSI.

Specifically, the terminal device maps the first HARQ-ACK in the order of firstly frequency domain and then time domain, starting from a first symbol which is after an OFDM symbol corresponding to the target REs.

The terminal device maps CSI-1 of the first CSI, starting from an OFDM symbol corresponding to a first non-target RE in a resource for the second PUCCH. CSI-1 of the first CSI cannot be mapped onto an RE(s) reserved for the first HARQ-ACK, or REs onto which the first HARQ-ACK is mapped. CSI-1 of the first CSI is not frequency-division multiplexed with a coherently demodulated signal.

The terminal device maps CSI-2 of the first CSI, starting from the OFDM symbol corresponding to the first non-target RE in the resource for the second PUCCH. CSI-2 of the first CSI can be mapped onto the RE(s) reserved for the first HARQ-ACK, but cannot be mapped onto the REs onto which the first HARQ-ACK is mapped or REs onto which CSI-1 is mapped. CSI-2 of the first CSI is not frequency-division multiplexed with a coherently demodulated signal.

The terminal device maps the second control information, starting from the OFDM symbol corresponding to the first non-target RE in the resource for the second PUCCH. The second control information can be mapped onto the RE(s) reserved for the first HARQ-ACK, but cannot be mapped onto a resource onto which the first control information is mapped. The second control information is not frequency-division multiplexed with a coherently demodulated signal.

When mapping the first HARQ-ACK, CSI-1 of the first CSI, and CSI-2 of the first CSI, the terminal device adopts distributed mapping with an interval d. In other words, positions of REs occupied in each OFDM symbol are as follows.

If the number of REs for unmapped first control information after scheduling is greater than the number of available REs in an OFDM symbol, *d=1.* That is, if there is still unmapped first control information, the terminal device will continue to map the first control information onto a next OFDM symbol.

If the number of REs for the unmapped first control information after scheduling is less than the number of available REs in an OFDM symbol, *d* is equal to a ratio of the number of available REs in an OFDM symbol to the number of required REs after scheduling.

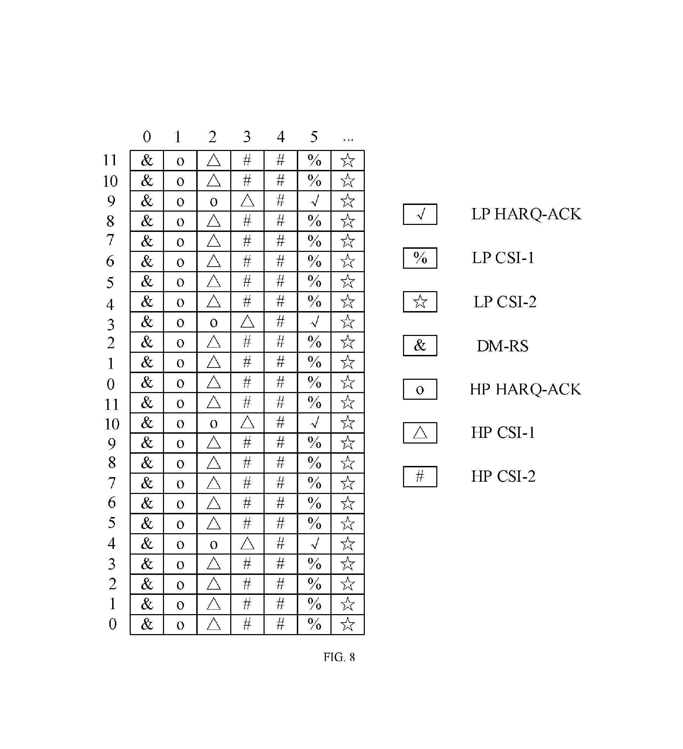

For example, refer to FIG. 8, which is a schematic diagram illustrating resource mapping provided in implementations of the disclosure. As illustrated in FIG. 8, an OFDM symbol with index 0 is used for transmission of a coherently demodulated signal which can also be referred to as a front loaded DMRS, as denoted by square grids with "&" in FIG. 8. The terminal device maps the first HARQ-ACK, starting from an OFDM symbol with index 1. Since the number of resources for the first HARQ-ACK is greater than the number of available REs in the OFDM symbol with index 1, *d=1.* The terminal device maps unmapped first HARQ-ACK onto an OFDM symbol with index 2. The number of resources for the first HARQ-ACK is less than the number of available REs in the OFDM symbol with index 2, and thus the terminal device maps the unmapped first HARQ-ACK onto REs corresponding to indexes 4, 10, 3, and 9 in frequency domain in the OFDM symbol with index 2, as denoted by square grid with "o" in FIG. 8. Then the terminal device maps CSI-1 of the first CSI, starting from an RE with index 0 in frequency domain in the OFDM symbol with index 2, and the terminal device cannot map CSI-1 of the first CSI onto the REs corresponding to indexes 4, 10, 3, and 9 in frequency domain onto which the first HARQ-ACK is mapped, as denoted by square grids with "△" in FIG. 8. Then the terminal device maps CSI-2 of the first CSI, starting from an RE with index 0 in frequency domain in an OFDM symbol with index 3, and CSI-2 of the first CSI cannot be mapped onto REs with indexes 4, 10, 3, and 9 in frequency domain onto which CSI-2 is mapped, as denoted by square grids with "#" in FIG. 8. Then the terminal device maps the second control information, starting from an RE with index 0 in frequency domain in an OFDM symbol with index 5, as denoted by square grids with "√", "☆", and "%" in FIG. 8.

Optionally, if there are two high-priority services, the time-domain resource for the first PUSCH will overlap with the time-domain resource for the first PUCCH. In this case, the terminal device can determine that the first PUSCH is to carry control information corresponding to the two high-priority services. For implementations thereof, reference can be made to the foregoing implementations in which there are both a high-priority service and a low-priority service, which will not be elaborated again herein.

In implementations of the disclosure, if the time-domain resource for the first PUSCH carrying the first UCI overlaps with the time-domain resource for the second PUCCH carrying the second UCI, the terminal device determines, according to the number of REs for carrying the first UCI and the second UCI, mapping information regarding mapping of the first control information and the second control information onto a same physical channel. The terminal device transmits a physical uplink channel carrying the first UCI and the second UCI to the access-network device according to the mapping information, thereby achieving multiplexing of the first control information and the second control information and thus avoiding discarding of the second control information. Therefore, by implementing the implementations of the disclosure, it is possible to improve throughput and performance of a communication system.

The methods of implementations of the disclosure have been elaborated above. For the sake of better implementation of the above schemes of implementations of the disclosure, the following will provide apparatuses of implementations of the disclosure accordingly.

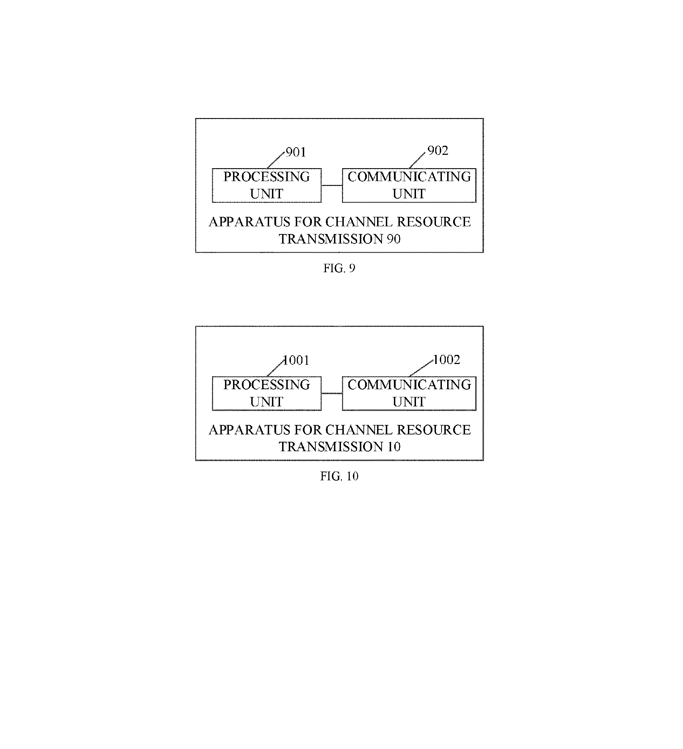

Refer to FIG. 9, which is a schematic structural diagram of an apparatus for channel resource transmission provided in implementations of the disclosure. The apparatus for channel resource transmission can be applied to the terminal device in the foregoing method implementations. The apparatus illustrated in FIG. 9 can be configured to perform some or all functions in the foregoing method implementations illustrated in FIG. 2. Detailed elaborations of various units are as follows.

A processing unit 901 is configured to determine a first information-amount of first UCI and a second information-amount of second UCI. The first UCI is carried on a first PUCCH, the second UCI is carried on a second PUCCH. A time-domain resource for the first PUCCH overlaps with a time-domain resource for the second PUCCH, and the first UCI has a higher priority than the second UCI. The processing unit 901 is configured to determine, according to the first information-amount and the second information-amount, whether the first UCI and the second UCI are to be carried on the first PUCCH. A communicating unit 902 is configured to transmit the first PUCCH to an access-network device if the first UCI and the second UCI are determined to be carried on the first PUCCH, where the first PUCCH carries the first UCI and the second UCI.

In a possible implementation, if the first PUCCH is of format 0 or format 1, and the processing unit 901 is specifically configured to determine that the first UCI and the second UCI are to be carried on the first PUCCH, on condition that a sum of the first information-amount and the second information-amount is less than or equal to a first channel-capacity threshold corresponding to the first PUCCH.

In a possible implementation, if the first PUCCH is of format 2, format 3, or format 4, the processing unit 901 is specifically configured to determine that the first UCI and the second UCI are to be carried on the first PUCCH, on condition that a third information-amount is less than or equal to a second channel-capacity threshold corresponding to the first PUCCH. The third information-amount is determined according to the first information-amount, the second information-amount, a first code rate of the first UCI, and a second code rate of the second UCI.

In a possible implementation, the first UCI is transmitted on the first PUCCH with the first code rate, the second UCI is transmitted on the first PUCCH with the second code rate, and the first code rate and the second code rate are pre-configured for the first PUCCH by the access-network device via higher-layer signaling.

In a possible implementation, if the first PUCCH is of format 2 and target REs for the first PUCCH are used for DMRS transmission, the processing unit 901 is specifically configured to obtain first jointly-encoded information by performing joint encoding on the first UCI, and obtain second jointly-encoded information by performing joint encoding on the second UCI. The processing unit 901 is specifically configured to map the first jointly-encoded information, starting from a first non-target RE in an order of firstly frequency domain and then time domain. The processing unit 901 is specifically configured to map the second jointly-encoded information, starting from a first non-target RE in a remaining resource for the first physical control channel in the order of firstly frequency domain and then time domain.

In a possible implementation, if the first PUCCH is of format 3 or format 4 and target REs for the first PUCCH are used for DMRS transmission, the processing unit 901 is specifically configured to obtain first jointly-encoded information and first separately-encoded information by encoding the first UCI, and obtain second jointly-encoded information and second separately-encoded information by encoding the second UCI. The processing unit 901 is specifically configured to map the first jointly-encoded information evenly onto REs which are at both sides of the target REs in an order of firstly frequency domain and then time domain. The processing unit 901 is specifically configured to map the second jointly-encoded information evenly onto REs which are at both sides of the target REs, other than REs corresponding to the first jointly-encoded information, in the order of firstly frequency domain and then time domain. The processing unit 901 is specifically configured to map the first separately-encoded information onto a first remaining resource in the order of firstly frequency domain and then time domain, where the first remaining resource is REs in a resource for the first PUCCH other than the REs corresponding to the first jointly-encoded information and REs corresponding to the second jointly-encoded information. The processing unit 901 is specifically configured to map the second separately-encoded information onto a second remaining resource in the order of firstly frequency domain and then time domain, where the second remaining resource is REs in the resource for the first PUCCH other than the REs corresponding to the first jointly-encoded information, the REs corresponding to the second jointly-encoded information, and REs corresponding to the first separately-encoded information.

In a possible implementation, if the first PUCCH is of format 3 or format 4 and target REs for the first PUCCH are used for DMRS transmission, the processing unit 901 is specifically configured to obtain first jointly-encoded information and first separately-encoded information by encoding the first UCI, and obtain second jointly-encoded information and second separately-encoded information by encoding the second UCI. The processing unit 901 is specifically configured to map the first jointly-encoded information evenly onto REs which are at both sides of the target REs in an order of firstly frequency domain and then time domain. The processing unit 901 is specifically configured to map the first separately-encoded information onto a first remaining resource in the order of firstly frequency domain and then time domain, where the first remaining resource is REs in a resource for the first PUCCH other than REs corresponding to the first jointly-encoded information. The processing unit 901 is specifically configured to map the second jointly-encoded information onto a second remaining resource in the order of firstly frequency domain and then time domain, where the second remaining resource is REs in the resource for the first PUCCH other than the REs corresponding to the first jointly-encoded information and REs corresponding to the first separately-encoded information. The processing unit 901 is specifically configured to map the second separately-encoded information onto a third remaining resource in the order of firstly frequency domain and then time domain, where the third remaining resource is REs in the resource for the first PUCCH other than the REs corresponding to the first jointly-encoded information, REs corresponding to the second jointly-encoded information, and the REs corresponding to the first separately-encoded information.

Refer to FIG. 9, which is a schematic structural diagram of an apparatus for channel resource transmission provided in implementations of the disclosure. The apparatus for channel resource transmission can be applied to the terminal device in the foregoing method implementations. The apparatus illustrated in FIG. 9 can be configured to perform some or all functions in the foregoing method implementations illustrated in FIG. 6. Detailed elaborations of various units are as follows.

A processing unit 901 is configured to determine the number of REs for first UCI and the number of REs for second UCI. The first UCI is carried on a first PUSCH, and the second UCI is carried on a second PUCCH. A time-domain resource for the first PUSCH overlaps with a time-domain resource for the second PUCCH, and the first UCI has a higher priority than the second UCI. The processing unit 901 is configured to determine mapping information according to the numbers of REs required, where the mapping information includes a mapping between the first UCI, the second UCI, and REs for a target physical uplink channel, and the target physical uplink channel is the first PUSCH or the second PUCCH. A communicating unit 902 is configured to transmit the target physical uplink channel carrying the first UCI and the second UCI to an access-network device according to the mapping information.

In a possible implementation, the processing unit 901 is specifically configured to determine the number of REs for the first UCI according to an offset-parameter group for the first UCI, and determine the number of REs for the second UCI according to an offset-parameter group for the second UCI. The offset-parameter group for the first UCI and the offset-parameter group for the second UCI are pre-configured by the access-network device via higher-layer signaling.

In a possible implementation, the processing unit 901 is specifically configured to receive indication information transmitted by the access-network device, where the indication information indicates a first offset-parameter group for the first UCI and a second offset-parameter group for the second UCI, the first offset-parameter group and the second offset-parameter group are selected from preset offset-parameter groups, and the preset offset-parameter groups are pre-configured by the access-network device via higher-layer signaling. The processing unit 901 is specifically configured to determine the number of REs for the first UCI according to the first offset-parameter group, and determine the number of REs for the second UCI according to the second offset-parameter group.

In a possible implementation, if the preset offset-parameter groups include a first set of offset-parameter groups and a second set of offset-parameter groups, and each set of offset-parameter groups includes $m$ offset parameter groups, the indication information indicates that the first offset-parameter group is an $i^{th}$ group among the first set of offset-parameter groups and the second offset-parameter group is an $i^{th}$ group among the second set of offset-parameter groups.

In a possible implementation, if the preset offset-parameter groups include n sets of offset-parameter groups, and each set of offset-parameter groups includes two offset parameter groups, the indication information indicates that the first offset-parameter group is a first group among a $j^{th}$ set of offset-parameter groups and the second offset-parameter group is a second group among the $j^{th}$ set of offset-parameter groups, and the $j^{th}$ set of offset-parameter groups is any one of the *n* sets of offset-parameter groups.

In a possible implementation, target REs for the target physical uplink channel are used for DMRS transmission, and the processing unit 901 is specifically configured to map the first UCI, starting from a first non-target RE in a resource for the target physical channel in an order of firstly frequency domain and then time domain. The processing unit 901 is specifically configured to map the second control information, starting from a first non-target RE in a remaining resource for the target physical channel in the order of firstly frequency domain and then time domain. The processing unit 901 is specifically configured to transmit the target physical uplink channel carrying the first UCI and the second UCI to the access-network device.

Refer to FIG. 10, which is a schematic structural diagram of an apparatus for channel resource transmission provided in implementations of the disclosure. The apparatus for channel resource transmission can be applied to the access-network device in the foregoing method implementations. The apparatus illustrated in FIG. 10 can be configured to perform some or all functions in the foregoing method implementations illustrated in FIG. 2. Detailed elaborations of various units are as follows.

A processing unit 1001 is configured to determine a first information-amount of first UCI and a second information-amount of second UCI. The first UCI is carried on a first PUCCH, and the second UCI is carried on a second PUCCH. A time-domain resource for the first PUCCH overlaps with a time-domain resource for the second PUCCH, and the first UCI has a higher priority than the second UCI. The processing unit 1001 is configured to determine, according to the first information-amount and the second information-amount, whether the first PUCCH carries the first UCI and the second UCI. A communicating unit 1002 is configured to receive the first PUCCH transmitted by a terminal device, if the first PUCCH is determined to be carrying the first UCI and the second UCI, where the first PUCCH carries the first UCI and the second UCI.

In a possible implementation, if the first PUCCH is of format 0 or format 1, the processing unit 1001 is specifically configured to determine that the first PUCCH carries the first UCI and the second UCI, on condition that a sum of the first information-amount and the second information-amount is less than or equal to a first channel-capacity threshold corresponding to the first PUCCH.

In a possible implementation, if the first PUCCH is of format 2, format 3, or format 4, the processing unit 1001 is specifically configured to determine that the first PUCCH carries the first UCI and the second UCI, on condition that a third information-amount is less than or equal to a second channel-capacity threshold corresponding to the first PUCCH. The third information-amount is determined according to the first information-amount, the second information-amount, a first code rate of the first UCI, and a second code rate of the second UCI.

In a possible implementation, the first UCI is transmitted on the first PUCCH with the first code rate, the second UCI is transmitted on the first PUCCH with the second code rate, and the first code rate and the second code rate are pre-configured for the first PUCCH via higher-layer signaling.

Refer to FIG. 10, which is a schematic structural diagram of an apparatus for channel resource transmission provided in implementations of the disclosure. The apparatus for channel resource transmission can be applied to the access-network device in the foregoing method implementations. The apparatus illustrated in FIG. 10 can be configured to perform some or all functions in the foregoing method implementations illustrated in FIG. 6. Detailed elaborations of various units are as follows.

A processing unit 1001 is configured to determine the number of REs for first UCI and the number of REs for second UCI. The first UCI is carried on a first PUSCH, and the second UCI is carried on a second PUCCH. A time-domain resource for the first PUSCH overlaps with a time-domain resource for the second PUCCH, and the first UCI has a higher priority than the second UCI. The processing unit 1001 is configured to determine mapping information according to the numbers of REs required, where the mapping information includes a mapping between the first UCI, the second UCI, and REs for a target physical uplink channel, and the target physical uplink channel is the first PUSCH or the second PUCCH. A communicating unit 1002 is configured to receive, according to the mapping information, the target physical uplink channel carrying the first UCI and the second UCI that is transmitted by a terminal device.

In a possible implementation, the processing unit 1001 is specifically configured to determine the number of REs for the first UCI according to an offset-parameter group for the first UCI, and determine the number of REs for the second UCI according to an offset-parameter group for the second UCI. The offset-parameter group for the first UCI and the offset-parameter group for the second UCI are pre-configured for the terminal device via higher-layer signaling.

In a possible implementation, the processing unit 1001 is specifically configured to transmit indication information to the terminal device, where the indication information indicates a first offset-parameter group for the first UCI and a second offset-parameter group for the second UCI, the first offset-parameter group and the second offset-parameter group are selected from preset offset-parameter groups, and the preset offset-parameter groups are pre-configured for the terminal device via higher-layer signaling. The processing unit 1001 is specifically configured to determine the number of REs for the first UCI according to the first offset-parameter group, and determine the number of REs for the second UCI according to the second offset-parameter group.

In a possible implementation, if the preset offset-parameter groups include a first set of offset-parameter groups and a second set of offset-parameter groups, and each set of offset-parameter groups includes $m$ offset parameter groups, the indication information indicates that the first offset-parameter group is an $i^{th}$ group among the first set of offset-parameter groups and the second offset-parameter group is an $i^{th}$ group among the second set of offset-parameter groups.

In a possible implementation, if the preset offset-parameter groups include $n$ sets of offset-parameter groups, and each set of offset-parameter groups includes two offset parameter groups, the indication information indicates that the first offset-parameter group is a first group among a $j^{th}$ set of offset-parameter groups and the second offset-parameter group is a second group among the $j^{th}$ set of offset-parameter groups, and the $j^{th}$ set of offset-parameter groups is any one of the n sets of offset-parameter groups.

According to another implementation of the disclosure, various units in the apparatuses for channel resource transmission illustrated in FIG. 9 and FIG. 10 can be respectively or all combined into one or several other units, or some unit(s) can be subdivided into multiple smaller units in terms of functions, which can implement the same operations without affecting realization of the technical effect of the implementations of the disclosure. The above units are divided based on logical functions. In practice, functions of one unit can also be realized by multiple units, or functions of multiple units can be realized by one unit. In other implementations of the disclosure, the apparatuses for channel resource transmission can also include other units. In practice, these functions can also be implemented with aid of other units, and can be implemented by multiple units cooperatively.

Based on the same concept, the apparatuses for channel resource transmission provided in implementations of the disclosure are similar to the methods for channel resource transmission in the method implementations of the disclosure in terms of principles for solving problems and advantages. Reference can be made to the principles and advantages of the methods, which will not be repeated herein for the sake of brevity.

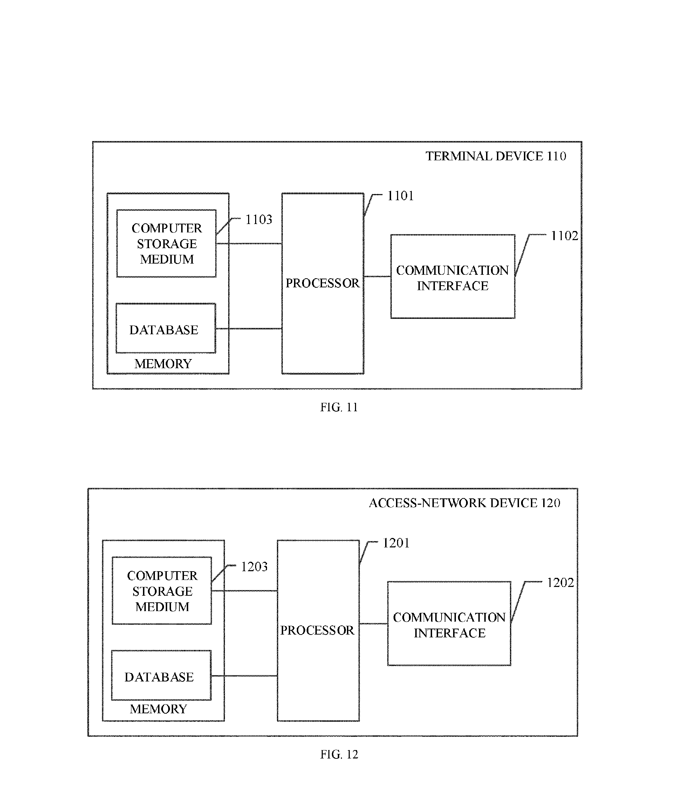

Based on illustrations of the foregoing method implementations and apparatus implementations, implementations of the disclosure further provide a schematic structural diagram of a terminal device. The terminal device can be equipped with the apparatus for channel resource transmission illustrated in FIG. 9 in the foregoing apparatus implementations. Referring to FIG. 11, the terminal device 110 at least includes a processor 1101, a communication interface 1102, and a computer storage medium 1103. The processor 1101, the communication interface 1102, and the computer storage medium 1103 of the terminal may be coupled via a bus or in other manners.

The computer storage medium 1103 may be stored in a memory of the terminal device. The computer storage medium 1103 is configured to store computer programs. The computer programs include program instructions. The processor 1101 is configured to execute the program instructions stored in the computer storage medium 1103. The processor 1101 (or referred to as central processing unit (CPU)) is a computing core and control core of a device, which can execute one or more instructions, and specifically load and execute the one or more instructions to implement a procedure of the method for channel resource transmission or corresponding functions.

Implementations of the disclosure further provide a computer-readable storage medium. The computer storage medium is a memory terminal device in the terminal device, and is configured to store programs and data. It can be understood that, the computer-readable storage medium herein may include a built-in storage medium of the terminal device, and may also include an extended storage medium supported by the terminal device. The computer-readable storage medium provides a storage space, where an operating system of the terminal device is stored in the storage space. In addition, one or more instructions which can be loaded and executed by the processor 1101 are also stored in the storage space, and these instructions may be one or more computer programs (including program codes). It should be noted that, the computer-readable storage medium herein can be a high-speed random access memory (RAM), or a non-volatile memory such as at least one magnetic-disc memory. Optionally, the computer-readable storage medium may also be at least one computer storage medium which is located far away from the processor described above.

In an implementation, the processor 1101 can load and execute one or more instructions stored in the computer-readable storage medium, to implement operations performed by the terminal device in the methods for channel resource transmission illustrated in FIG. 2 and FIG. 6.

Based on illustrations of the foregoing method implementations and apparatus implementations, implementations of the disclosure further provide a schematic structural diagram of an access-network device. The access-network device can be equipped with the apparatus for channel resource transmission illustrated in FIG. 10 in the foregoing apparatus implementations. Referring to FIG. 12, the access-network device 120 at least includes a processor 1201, a communication interface 1202, and a computer storage medium 1203. The processor 1201, the communication interface 1202, and the computer storage medium 1203 of the terminal may be coupled via a bus or in other manners.

The computer storage medium 1203 may be stored in a memory of the access-network device. The computer storage medium 1203 is configured to store computer programs. The computer programs include program instructions. The processor 1201 is configured to execute the program instructions stored in the computer storage medium 1203. The processor 1201 (or referred to as CPU) is a computing core and control core of a device, which can execute one or more instructions, and specifically load and execute the one or more instructions to implement a procedure of the method for channel resource transmission or corresponding functions.

Implementations of the disclosure further provide a computer-readable storage medium. The computer storage medium is a memory access-network device in the access-network device, and is configured to store programs and data. It can be understood that, the computer-readable storage medium herein may include a built-in storage medium of the access-network device, and may also include an extended storage medium supported by the access-network device. The computer-readable storage medium provides a storage space, where an operating system of the access-network device is stored in the storage space. In addition, one or more instructions which can be loaded and executed by the processor 1201 are also stored in the storage space, and these instructions may be one or more computer programs (including program codes). It should be noted that, the computer-readable storage medium herein can be a high-speed RAM, or a non-volatile memory such as at least one magnetic-disc memory. Optionally, the computer-readable storage medium may also be at least one computer storage medium which is located far away from the processor described above.

In an implementation, the processor 1201 can load and execute one or more instructions stored in the computer-readable storage medium, to implement operations performed by the access-network device in the methods for channel resource transmission illustrated in FIG. 2 and FIG. 6.

Based on the same concept, the terminal device and the access-network device provided in implementations of the disclosure are similar to the methods for channel resource transmission in the method implementations of the disclosure in terms of principles for solving problems and advantages. Reference can be made to the principles and advantages of the methods, which will not be repeated herein for the sake of brevity.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

**Claims**

1. A method for channel resource transmission, comprising:

   determining, by a terminal device, a first information-amount of first uplink control information (UCI) and a second information-amount of second UCI, the first UCI being carried on a first physical uplink control channel (PUCCH), the second UCI being carried on a second PUCCH, wherein a time-domain resource for the first PUCCH overlaps with a time-domain resource for the second PUCCH, and the first UCI has a higher priority than the second UCI;
   determining according to the first information-amount and the second information-amount, by the terminal device, whether the first UCI and the second UCI are to be carried on the first PUCCH; and
   transmitting, by the terminal device, the first PUCCH to an access-network device based on a determination that the first UCI and the second UCI are to be carried on the first PUCCH, the first PUCCH carrying the first UCI and the second UCI.

2. The method of claim 1, wherein when the first PUCCH is of format 0 or format 1, determining according to the first information-amount and the second information-amount, by the terminal device, whether the first UCI and the second UCI are to be carried on the first PUCCH comprises:
   determining, by the terminal device, that the first UCI and the second UCI are to be carried on the first PUCCH, when a sum of the first information-amount and the second information-amount is less than or equal to a first channel-capacity threshold corresponding to the first PUCCH.

3. The method of claim 1, wherein when the first PUCCH is of format 2, format 3, or format 4, determining according to the first information-amount and the second information-amount, by the access-network device, whether the first UCI and the second UCI are to be carried on the first PUCCH comprises:
   determining, by the terminal device, that the first UCI and the second UCI are to be carried on the first PUCCH, when a third information-amount is less than or equal to a second channel-capacity threshold corresponding to the first PUCCH, wherein the third information-amount is determined according to the first information-amount, the second information-amount, a first code rate of the first UCI, and a second code rate of the second UCI.

4. The method of claim 3, wherein the first UCI is transmitted on the first PUCCH with the first code rate, the second UCI is transmitted on the first PUCCH with the second code rate, and the first code rate and the second code rate are pre-configured for the first PUCCH by the access-network device via higher-layer signaling.

5. The method of claim 1, wherein when the first PUCCH is of format 2 and target resource elements (RE) for the first PUCCH are used for demodulation reference signal (DMRS) transmission, prior to transmitting, by the terminal device, the first PUCCH to the access-network device, the method further comprises:

obtaining, by the terminal device, first j ointly-encoded information by performing joint encoding on the first UCI, and obtaining second j ointly-encoded information by performing joint encoding on the second UCI;
mapping, by the terminal device, the first j ointly-encoded information, starting from a first non-target RE in an order of firstly frequency domain and then time domain; and
mapping, by the terminal device, the second j ointly-encoded information, starting from a first non-target RE in a remaining resource for the first physical control channel in the order of firstly frequency domain and then time domain.

6. The method of claim 1, wherein when the first PUCCH is of format 3 or format 4 and target REs for the first PUCCH are used for DMRS transmission, prior to transmitting, by the terminal device, the first PUCCH to the access-network device, the method further comprises:

obtaining, by the terminal device, first j ointly-encoded information and first separately-encoded information by encoding the first UCI, and obtaining second j ointly-encoded information and second separately-encoded information by encoding the second UCI;
mapping, by the terminal device, the first j ointly-encoded information evenly onto REs which are at both sides of the target REs in an order of firstly frequency domain and then time domain;
mapping, by the terminal device, the second j ointly-encoded information evenly onto REs which are at both sides of the target REs, other than REs corresponding to the first jointly-encoded information, in the order of firstly frequency domain and then time domain;
mapping, by the terminal device, the first separately-encoded information onto a first remaining resource in the order of firstly frequency domain and then time domain, wherein the first remaining resource is REs in a resource for the first PUCCH other than the REs corresponding to the first jointly-encoded information and REs corresponding to the second jointly-encoded information; and
mapping, by the terminal device, the second separately-encoded information onto a second remaining resource in the order of firstly frequency domain and then time domain, wherein the second remaining resource is REs in the resource for the first PUCCH other than the REs corresponding to the first jointly-encoded information, the REs corresponding to the second jointly-encoded information, and REs corresponding to the first separately-encoded information.

7. The method of claim 1, wherein when the first PUCCH is of format 3 or format 4 and target REs for the first PUCCH are used for DMRS transmission, prior to transmitting, by the terminal device, the first PUCCH to the access-network device, the method further comprises:

obtaining, by the terminal device, first j ointly-encoded information and first separately-encoded information by encoding the first UCI, and obtaining second j ointly-encoded information and second separately-encoded information by encoding the second UCI;
mapping, by the terminal device, the first j ointly-encoded information evenly onto REs which are at both sides of the target REs in an order of firstly frequency domain and then time domain;
mapping, by the terminal device, the first separately-encoded information onto a first remaining resource in the order of firstly frequency domain and then time domain, wherein the first remaining resource is REs in a resource for the first PUCCH other than REs corresponding to the first j ointly-encoded information;
mapping, by the terminal device, the second j ointly-encoded information onto a second remaining resource in the order of firstly frequency domain and then time domain, wherein the second remaining resource is REs in the resource for the first PUCCH other than the REs corresponding to the first jointly-encoded information and REs corresponding to the first separately-encoded information; and
mapping, by the terminal device, the second separately-encoded information onto a third remaining resource in the order of firstly frequency domain and then time domain, wherein the third remaining resource is REs in the resource for the first PUCCH other than the REs corresponding to the first j ointly-encoded information, REs corresponding to the second jointly-encoded information, and the REs corresponding to the first separately-encoded information.

8. A method for channel resource transmission, comprising:

determining, by an access-network device, a first information-amount of first uplink control information (UCI) and a second information-amount of second UCI, the first UCI being carried on a first physical uplink control channel (PUCCH), the second UCI being carried on a second PUCCH, wherein a time-domain resource for the first PUCCH overlaps with a time-domain resource for the second PUCCH, and the first UCI has a higher priority than the second UCI;

determining according to the first information-amount and the second information-amount, by the access-network device, whether the first PUCCH carries the first UCI and the second UCI; and

receiving, by the access-network device, the first PUCCH transmitted by a terminal device, based on a determination that the first PUCCH carries the first UCI and the second UCI, the first PUCCH carrying the first UCI and the second UCI.

9.  The method of claim 8, wherein when the first PUCCH is of format 0 or format 1, determining according to the first information-amount and the second information-amount, by the access-network device, whether the first PUCCH carries the first UCI and the second UCI comprises:

determining, by the access-network device, that the first PUCCH carries the first UCI and the second UCI, when a sum of the first information-amount and the second information-amount is less than or equal to a first channel-capacity threshold corresponding to the first PUCCH.

10. The method of claim 8, wherein when the first PUCCH is of format 2, format 3, or format 4, determining according to the first information-amount and the second information-amount, by the access-network device, whether the first PUCCH carries the first UCI and the second UCI comprises:

determining, by the access-network device, that the first PUCCH carries the first UCI and the second UCI, when a third information-amount is less than or equal to a second channel-capacity threshold corresponding to the first PUCCH, wherein the third information-amount is determined according to the first information-amount, the second information-amount, a first code rate of the first UCI, and a second code rate of the second UCI.

11. The method of claim 10, wherein the first UCI is transmitted on the first PUCCH with the first code rate, the second UCI is transmitted on the first PUCCH with the second code rate, and the first code rate and the second code rate are pre-configured for the first PUCCH via higher-layer signaling.

12. A method for channel resource transmission, comprising:

determining, by a terminal device, a number of resource elements (REs) for a first uplink control information (UCI) and a number of REs for a second UCI respectively, the first UCI being carried on a first physical uplink shared channel (PUSCH), the second UCI being carried on a second physical uplink control channel (PUCCH), wherein a time-domain resource for the first PUSCH overlaps with a time-domain resource for the second PUCCH, and the first UCI has a higher priority than the second UCI;

determining, by the terminal device, mapping information according to the numbers of REs required, the mapping information comprising a mapping between the first UCI, the second UCI, and REs for a target physical uplink channel, and the target physical uplink channel being the first PUSCH or the second PUCCH; and

transmitting, by the terminal device, the target physical uplink channel carrying the first UCI and the second UCI to an access-network device according to the mapping information.

13. The method of claim 12, wherein determining, by the terminal device, the number of REs for the first UCI and the number of REs for the second UCI comprises:

determining, by the terminal device, the number of REs for the first UCI according to an offset-parameter group for the first UCI; and

determining, by the terminal device, the number of REs for the second UCI according to an offset-parameter group for the second UCI, wherein

the offset-parameter group for the first UCI and the offset-parameter group for the second UCI are pre-configured for the terminal device by the access-network device via higher-layer signaling.

14. The method of claim 12, wherein determining, by the terminal device, the number of REs for the first UCI and the number of REs for the second UCI comprises:

receiving, by the terminal device, indication information from the access-network device, wherein the indication information indicates a first offset-parameter group for the first UCI and a second offset-parameter group for the second UCI, the first offset-parameter group and the second offset-parameter group are selected from preset offset-parameter groups, and the preset offset-parameter groups are pre-configured for the terminal device by the access-network device via higher-layer signaling;

determining, by the terminal device, the number of REs for the first UCI according to the first offset-parameter group; and

determining, by the terminal device, the number of REs for the second UCI according to the second offset-parameter group.

15. The method of claim 14, wherein when the preset offset-parameter groups comprise a first set of offset-parameter groups and a second set of offset-parameter groups, and each set of offset-parameter groups comprises $m$ offset parameter groups, the indication information indicates that the first offset-parameter group is an $i^{th}$ group among the first set of offset-parameter groups and the second offset-parameter group is an $i^{th}$ group among the second set of offset-parameter groups.

16. The method of claim 14, wherein when the preset offset-parameter groups comprise $n$ sets of offset-parameter groups, and each set of offset-parameter groups comprises two offset parameter groups, the indication information indicates that the first offset-parameter group is first group among a $j^{th}$ set of offset-parameter groups and the second offset-parameter group is second group among the $j^{th}$ set of offset-parameter groups, and the $j^{th}$ set of offset-parameter groups is any one of the n sets of offset-parameter groups.

17. The method of claim 12, wherein target REs of the target physical uplink channel are used for demodulation reference signal (DMRS) transmission, and transmitting, by the terminal device, the target physical uplink channel carrying the first UCI and the second UCI to the access-network device according to the mapping information comprises:

mapping, by the terminal device, the first UCI, starting from first non-target RE in a resource for the target physical channel in an order of firstly frequency domain and then time domain;

mapping, by the terminal device, the second control information, starting from first non-target RE in a remaining resource of the target physical channel in the order of firstly frequency domain and then time domain; and

transmitting, by the terminal device, the target physical uplink channel carrying the first UCI and the second UCI to the access-network device.

18. A method for channel resource transmission, comprising:

determining, by an access-network device, a number of resource elements (RE) for first uplink control information (UCI) and a number of REs for second UCI, the first UCI being carried on a first physical uplink shared channel (PUSCH), the second UCI being carried on a second physical uplink control channel (PUCCH), wherein a time-domain resource for the first PUSCH overlaps with a time-domain resource for the second PUCCH, and the first UCI has a higher priority than the second UCI;

determining, by the access-network device, mapping information according to the numbers of REs required, the mapping information comprising a mapping between the first UCI, the second UCI, and REs for a target physical uplink channel, and the target physical uplink channel being the first PUSCH or the second PUCCH; and

receiving according to the mapping information, by the access-network device, the target physical uplink channel carrying the first UCI and the second UCI that is transmitted by a terminal device.

19. The method of claim 18, wherein determining, by the access-network device, the number of REs for the first UCI and the number of REs for the second UCI comprises:

determining, by the access-network device, the number of REs for the first UCI according to an offset-parameter group for the first UCI; and

determining, by the access-network device, the number of REs for the second UCI according to an offset-parameter group for the second UCI, wherein

the offset-parameter group for the first UCI and the offset-parameter group for the second UCI are pre-configured for the terminal device by the access-network device via higher-layer signaling.

20. The method of claim 18, wherein determining, by the access-network device, the number of REs for the first UCI and the number of REs for the second UCI comprises:

transmitting, by the access-network device, indication information to the terminal device, wherein the indication information indicates a first offset-parameter group for the first UCI and a second offset-parameter group for the second UCI, the first offset-parameter group and the second offset-parameter group are selected from preset offset-parameter groups, and the preset offset-parameter groups are pre-configured for the terminal device by the access-network device via higher-layer signaling;

determining, by the access-network device, the number of REs for the first UCI according to the first offset-parameter group; and

determining, by the access-network device, the number of REs for the second UCI according to the second offset-parameter group.

21. The method of claim 20, wherein when the preset offset-parameter groups comprise a first set of offset-parameter groups and a second set of offset-parameter groups, and each set of offset-parameter groups comprises $m$ offset parameter groups, the indication information indicates that the first offset-parameter group is an $i^{th}$ group among the first set of offset-parameter groups and the second offset-parameter group is an $i^{th}$ group among the second set of offset-parameter groups.

22. The method of claim 20, wherein when the preset offset-parameter groups comprise $n$ sets of offset-parameter groups, and each set of offset-parameter groups comprises two offset parameter groups, the indication information indicates that the first offset-parameter group is a first group among a $j^{th}$ set of offset-parameter groups and the second offset-parameter group is a second group among the $j^{th}$ set of offset-parameter groups, and the $j^{th}$ set of offset-parameter groups is any one of the $n$ sets of offset-parameter groups.

23. A terminal device, comprising:

a memory configured to store computer-readable instructions; and
a processor coupled with the memory, and configured to execute the computer-readable instructions to cause the terminal device to perform the method of any of claims 1 to 7 or perform the method of any of claims 12 to 17.

24. An access-network device, comprising:
a memory configured to store computer-readable instructions; and
a processor coupled with the memory, and configured to execute the computer-readable instructions to cause the access device to perform the method of any of claims 8 to 11 or to perform the method of any of claims 18 to 22.

ACCESS-
NETWORK
DEVICE

TERMINAL
DEVICE

FIG. 1

TERMINAL DEVICE

ACCESS-NETWORK DEVICE

S201, DETERMINE FIRST INFORMATION-
AMOUNT OF FIRST UCI AND SECOND
INFORMATION-AMOUNT OF SECOND UCI

S201, DETERMINE FIRST INFORMATION-
AMOUNT OF FIRST UCI AND SECOND
INFORMATION-AMOUNT OF SECOND UCI

S202, DETERMINE, ACCORDING TO FIRST
INFORMATION-AMOUNT AND SECOND
INFORMATION-AMOUNT, WHETHER FIRST
UCI AND SECOND UCI ARE TO BE
CARRIED ON FIRST PUCCH

S202, DETERMINE, ACCORDING TO FIRST
INFORMATION-AMOUNT AND SECOND
INFORMATION-AMOUNT, WHETHER FIRST
UCI AND SECOND UCI ARE TO BE
CARRIED ON FIRST PUCCH

S203, TRANSMIT FIRST PUCCH, WHERE
FIRST PUCCH CARRIES FIRST UCI AND
SECOND UCI

FIG. 2

FIG. 3

| | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| 11 | ☆ | ☆ | % | √ | % | △ | △ | △ | △ | % | √ | % | △ | △ |
| 10 | ☆ | ☆ | % | √ | % | △ | △ | △ | △ | % | √ | % | △ | △ |
| 9 | ☆ | ☆ | % | √ | % | △ | △ | △ | △ | % | √ | % | △ | △ |
| 8 | ☆ | ☆ | % | √ | % | △ | △ | △ | △ | % | √ | % | △ | △ |
| 7 | ☆ | ☆ | % | √ | % | △ | △ | △ | △ | % | √ | % | △ | △ |
| 6 | ☆ | o | % | √ | % | o | △ | △ | o | % | √ | % | o | △ |
| 5 | ☆ | o | % | √ | % | o | △ | △ | o | % | √ | % | o | △ |
| 4 | ☆ | o | % | √ | % | o | △ | △ | o | % | √ | % | o | △ |
| 3 | ☆ | o | % | √ | % | o | △ | △ | o | % | √ | % | o | △ |
| 2 | ☆ | o | % | √ | % | o | △ | △ | o | % | √ | % | o | △ |
| 1 | ☆ | o | % | √ | % | o | △ | △ | o | % | √ | % | o | △ |
| 0 | ☆ | o | % | √ | % | o | △ | △ | o | % | √ | % | o | △ |
| 11 | ☆ | o | % | √ | % | o | △ | △ | o | % | √ | % | o | △ |
| 10 | ☆ | % | % | √ | % | % | △ | △ | % | % | √ | % | % | △ |
| 9 | ☆ | % | % | √ | % | % | △ | △ | % | % | √ | % | % | △ |
| 8 | ☆ | % | % | √ | % | % | △ | △ | % | % | √ | % | % | △ |
| 7 | ☆ | % | % | √ | % | % | △ | △ | % | % | √ | % | % | △ |
| 6 | ☆ | % | % | √ | % | % | △ | △ | % | % | √ | % | % | △ |
| 5 | ☆ | % | % | √ | % | % | △ | △ | % | % | √ | % | % | △ |
| 4 | ☆ | % | % | √ | % | % | △ | △ | % | % | √ | % | % | △ |
| 3 | ☆ | % | % | √ | % | % | △ | △ | % | % | √ | % | % | △ |
| 2 | ☆ | % | % | √ | % | % | △ | △ | % | % | √ | % | % | △ |
| 1 | ☆ | % | % | √ | % | % | △ | △ | % | % | √ | % | % | △ |
| 0 | ☆ | % | % | √ | % | % | △ | △ | % | % | √ | % | % | △ |

| √ | DM-RS |
| % | HP (HARQ-ACK+SR+CSI-1) |
| ☆ | HP CSI-2 |
| o | LP (HARQ-ACK+SR+CSI-1) |
| △ | LP CSI-2 |

FIG. 4

|    | 0 | 1 | 2 | 3 | 4 | 5 | 6 | 7 | 8 | 9 | 10 | 11 | 12 | 13 |
|----|---|---|---|---|---|---|---|---|---|---|----|----|----|----|
| 11 | ☆ | ☆ | % | √ | % | o | o | o | △ | % | √ | % | △ | △ |
| 10 | ☆ | ☆ | % | √ | % | o | o | o | △ | % | √ | % | △ | △ |
| 9  | ☆ | ☆ | % | √ | % | o | o | o | △ | % | √ | % | △ | △ |
| 8  | ☆ | ☆ | % | √ | % | o | o | o | △ | % | √ | % | △ | △ |
| 7  | ☆ | ☆ | % | √ | % | o | o | o | △ | % | √ | % | △ | △ |
| 6  | ☆ | ☆ | % | √ | % | ☆ | o | o | △ | % | √ | % | △ | △ |
| 5  | ☆ | ☆ | % | √ | % | ☆ | o | o | △ | % | √ | % | △ | △ |
| 4  | ☆ | ☆ | % | √ | % | ☆ | o | o | △ | % | √ | % | △ | △ |
| 3  | ☆ | ☆ | % | √ | % | ☆ | o | o | △ | % | √ | % | △ | △ |
| 2  | ☆ | ☆ | % | √ | % | ☆ | o | o | △ | % | √ | % | △ | △ |
| 1  | ☆ | ☆ | % | √ | % | ☆ | o | o | △ | % | √ | % | △ | △ |
| 0  | ☆ | ☆ | % | √ | % | ☆ | o | o | △ | % | √ | % | △ | △ |
| 11 | ☆ | ☆ | % | √ | % | ☆ | o | o | △ | % | √ | % | △ | △ |
| 10 | ☆ | % | % | √ | % | % | o | o | % | % | √ | % | % | △ |
| 9  | ☆ | % | % | √ | % | % | o | o | % | % | √ | % | % | △ |
| 8  | ☆ | % | % | √ | % | % | o | o | % | % | √ | % | % | △ |
| 7  | ☆ | % | % | √ | % | % | o | o | % | % | √ | % | % | △ |
| 6  | ☆ | % | % | √ | % | % | o | o | % | % | √ | % | % | △ |
| 5  | ☆ | % | % | √ | % | % | o | o | % | % | √ | % | % | △ |
| 4  | ☆ | % | % | √ | % | % | o | o | % | % | √ | % | % | △ |
| 3  | ☆ | % | % | √ | % | % | o | o | % | % | √ | % | % | △ |
| 2  | ☆ | % | % | √ | % | % | o | o | % | % | √ | % | % | △ |
| 1  | ☆ | % | % | √ | % | % | o | o | % | % | √ | % | % | △ |
| 0  | ☆ | % | % | √ | % | % | o | o | % | % | √ | % | % | △ |

Legend:

| √ | DM-RS |
| % | HP (HARQ-ACK+SR+CSI-1) |
| ☆ | HP CSI-2 |
| o | LP (HARQ-ACK+SR+CSI-1) |
| △ | LP CSI-2 |

FIG. 5

TERMINAL DEVICE           ACCESS-NETWORK DEVICE

S601, DETERMINE NUMBER OF RES FOR FIRST UCI AND NUMBER OF RES FOR SECOND UCI

S601, DETERMINE NUMBER OF RES FOR FIRST UCI AND NUMBER OF RES FOR SECOND UCI

S602, DETERMINE MAPPING INFORMATION ACCORDING TO NUMBERS OF RES

S602, DETERMINE MAPPING INFORMATION ACCORDING TO NUMBERS OF RES

S603, TRANSMIT, ACCORDING TO THE MAPPING INFORMATION, TARGET PHYSICAL UPLINK CHANNEL CARRYING FIRST UCI AND SECOND UCI

FIG. 6

|    | 0 | 1 | 2 | 3 | 4 | 5 | 6 | 7 | ... |
|----|---|---|---|---|---|---|---|---|-----|
| 11 | & | o | △ | # | # | % | ☆ | X | X |
| 10 | & | o | △ | # | # | % | ☆ | X | X |
| 9  | & | o | o | △ | # | √ | ☆ | X | X |
| 8  | & | o | △ | # | # | % | ☆ | X | X |
| 7  | & | o | △ | # | # | % | ☆ | X | X |
| 6  | & | o | △ | # | # | % | ☆ | X | X |
| 5  | & | o | △ | # | # | % | ☆ | X | X |
| 4  | & | o | △ | # | # | % | ☆ | X | X |
| 3  | & | o | o | △ | # | √ | ☆ | X | X |
| 2  | & | o | △ | # | # | % | ☆ | X | X |
| 1  | & | o | △ | # | # | % | ☆ | X | X |
| 0  | & | o | △ | # | # | % | ☆ | X | X |
| 11 | & | o | △ | # | # | % | ☆ | X | X |
| 10 | & | o | o | △ | # | √ | ☆ | X | X |
| 9  | & | o | △ | # | # | % | ☆ | X | X |
| 8  | & | o | △ | # | # | % | ☆ | X | X |
| 7  | & | o | △ | # | # | % | ☆ | X | X |
| 6  | & | o | △ | # | # | % | ☆ | X | X |
| 5  | & | o | △ | # | # | % | ☆ | X | X |
| 4  | & | o | o | △ | # | √ | ☆ | X | X |
| 3  | & | o | △ | # | # | % | ☆ | X | X |
| 2  | & | o | △ | # | # | % | ☆ | X | X |
| 1  | & | o | △ | # | # | % | ☆ | X | X |
| 0  | & | o | △ | # | # | % | ☆ | X | X |

Legend:

- √ — LP HARQ-ACK
- % — LP CSI-1
- ☆ — LP CSI-2
- & — DM-RS
- o — HP HARQ-ACK
- △ — HP CSI-1
- # — HP CSI-2
- X — UL-SCH

FIG. 7

| | 0 | 1 | 2 | 3 | 4 | 5 | ... |
|---|---|---|---|---|---|---|---|
| 11 | & | o | △ | # | # | % | ☆ |
| 10 | & | o | △ | # | # | % | ☆ |
| 9 | & | o | o | △ | # | √ | ☆ |
| 8 | & | o | △ | # | # | % | ☆ |
| 7 | & | o | △ | # | # | % | ☆ |
| 6 | & | o | △ | # | # | % | ☆ |
| 5 | & | o | △ | # | # | % | ☆ |
| 4 | & | o | △ | # | # | % | ☆ |
| 3 | & | o | o | △ | # | √ | ☆ |
| 2 | & | o | △ | # | # | % | ☆ |
| 1 | & | o | △ | # | # | % | ☆ |
| 0 | & | o | △ | # | # | % | ☆ |
| 11 | & | o | △ | # | # | % | ☆ |
| 10 | & | o | o | △ | # | √ | ☆ |
| 9 | & | o | △ | # | # | % | ☆ |
| 8 | & | o | △ | # | # | % | ☆ |
| 7 | & | o | △ | # | # | % | ☆ |
| 6 | & | o | △ | # | # | % | ☆ |
| 5 | & | o | △ | # | # | % | ☆ |
| 4 | & | o | o | △ | # | √ | ☆ |
| 3 | & | o | △ | # | # | % | ☆ |
| 2 | & | o | △ | # | # | % | ☆ |
| 1 | & | o | △ | # | # | % | ☆ |
| 0 | & | o | △ | # | # | % | ☆ |

| Symbol | Meaning |
|---|---|
| √ | LP HARQ-ACK |
| % | LP CSI-1 |
| ☆ | LP CSI-2 |
| & | DM-RS |
| o | HP HARQ-ACK |
| △ | HP CSI-1 |
| # | HP CSI-2 |

FIG. 8

FIG. 9

FIG. 10

TERMINAL DEVICE 110

COMPUTER
STORAGE
MEDIUM — 1103

— 1101

PROCESSOR

COMMUNICATION
INTERFACE — 1102

DATABASE

MEMORY

FIG. 11

ACCESS-NETWORK DEVICE 120

COMPUTER
STORAGE
MEDIUM — 1203

— 1201

PROCESSOR

COMMUNICATION
INTERFACE — 1202

DATABASE

MEMORY

FIG. 12

## INTERNATIONAL SEARCH REPORT

International application No.

**PCT/CN2021/087247**

### A. CLASSIFICATION OF SUBJECT MATTER

H04W 72/04(2009.01)i; H04W 72/10(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT, 3GPP: 上行控制信息, 物理上行控制信道, 复用, 合并, 时域, 资源, 重叠, 重合, 优先级, 编码, 联合, 独立, uplink control information, UCI, physical uplink control channel, PUCCH, multiplex, combine, time domain, resource, overlap, priority, code, encode, joint, absolute, independent

### C. DOCUMENTS CONSIDERED TO BE RELEVANT

| Category* | Citation of document, with indication, where appropriate, of the relevant passages | Relevant to claim No. |
|---|---|---|
| X | CN 109392169 A (VIVO COMMUNICATION TECHNOLOGY CO., LTD.) 26 February 2019 (2019-02-26)<br>description, paragraphs [0033]-[0173] | 1-24 |
| X | CN 110225587 A (TELECOMMUNICATIONS SCIENCE AND TECHNOLOGY RESEARCH INSTITUTE CO., LTD.) 10 September 2019 (2019-09-10)<br>description paragraphs [0093]-[0234] | 1-24 |
| X | CN 110798291 A (ZTE CORPORATION) 14 February 2020 (2020-02-14)<br>description, paragraphs [0032]-[0160] | 1-24 |
| X | HUAWEI et al. "UL intra-UE multiplexing between control channels"<br>*3GPP TSG RAN WG1 Meeting #97, R1-1907547*, 03 May 2019 (2019-05-03),<br>pp. 1-4 | 1-24 |
| PX | CN 111835480 A (VIVO COMMUNICATION TECHNOLOGY CO., LTD.) 27 October 2020 (2020-10-27)<br>description paragraphs [0029]-[0244] | 1-24 |

☑ Further documents are listed in the continuation of Box C. ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **15 June 2021** | **29 June 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2021/087247**

**C.    DOCUMENTS CONSIDERED TO BE RELEVANT**

| Category* | Citation of document, with indication, where appropriate, of the relevant passages | Relevant to claim No. |
|---|---|---|
| A | CN 106067845 A (BEIJING SAMSUNG TELECOM R&D CENTER et al.) 02 November 2016 (2016-11-02)<br>    entire document | 1-24 |

Form PCT/ISA/210 (second sheet) (January 2015)

INTERNATIONAL SEARCH REPORT
Information on patent family members

International application No.

**PCT/CN2021/087247**

| Patent document cited in search report | | | Publication date (day/month/year) | Patent family member(s) | | | Publication date (day/month/year) |
|---|---|---|---|---|---|---|---|
| CN | 109392169 | A | 26 February 2019 | WO | 2019024713 | A1 | 07 February 2019 |
| CN | 110225587 | A | 10 September 2019 | EP | 3761735 | A1 | 06 January 2021 |
| | | | | EP | 3761735 | A4 | 03 March 2021 |
| | | | | TW | 201937969 | A | 16 September 2019 |
| | | | | KR | 20200120731 | A | 21 October 2020 |
| | | | | WO | 2019165968 | A1 | 06 September 2019 |
| | | | | US | 2021014854 | A1 | 14 January 2021 |
| CN | 110798291 | A | 14 February 2020 | WO | 2020025045 | A1 | 06 February 2020 |
| | | | | KR | 2021027474 | A | 10 March 2021 |
| CN | 111835480 | A | 27 October 2020 | WO | 2021004316 | A1 | 14 January 2021 |
| CN | 106067845 | A | 02 November 2016 | WO | 2016163855 | A1 | 13 October 2016 |

Form PCT/ISA/210 (patent family annex) (January 2015)